(19) Europäisches Patentamt
European Patent Office
Office européen des brevets

(11) Publication number: 0 161 058 B1

(12) EUROPEAN PATENT SPECIFICATION

(45) Date of publication of patent specification: 24.05.89

(51) Int. Cl.[4]: G 01 N 30/48, C 03 C 17/30, C 09 C 3/12, B 05 D 5/04

(21) Application number: 85302295.2

(22) Date of filing: 02.04.85

(54) Dual surface materials.

(30) Priority: 09.04.84 US 598091

(43) Date of publication of application: 13.11.85 Bulletin 85/46

(45) Publication of the grant of the patent: 24.05.89 Bulletin 89/21

(84) Designated Contracting States: DE FR GB

(56) References cited:
EP-A-0 050 167
DE-A-2 313 073
DE-A-2 513 608
DE-A-3 117 732
DE-B-2 426 306
GB-A- 925 540
GB-A-1 110 331
GB-A-1 312 665
US-A-4 379 931

(73) Proprietor: DOW CORNING CORPORATION
3901 S. Saginaw Road
Midland Michigan 48640 (US)

(72) Inventor: Tangney, Thomas John
5816 Swede Road
Midland Michigan (US)
Inventor: Williams, Dwight Edward
2010 Wilmington
Midland Michigan (US)

(74) Representative: Laredo, Jack Joseph et al
Elkington and Fife Beacon House 113 Kingsway
London, WC2B 6PP (GB)

EP 0 161 058 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

According to Plueddemann, in the chapter on silylating agents in "encyclopedia of Chemical Technology", 3rd edition, volume 20, page 962 et seq., silylation is the displacement of active hydrogen from an organic molecule by a silyl group. Plueddemann further states that "the active hydrogen is usually OH, NH, or SH, and the silylating agent is usually a trimethylsilyl halide or a nitrogen-functional compound. A mixture of silyating agents may be used; a mixture of trimethylchlorsilane and hexamethyldisilazine is more reactive than either reagent alone, and the by-products combine to form neutral ammonium chloride."

Thus, what Plueddemann has described is what those skilled in the art regard as the "normal way" to silylate organic molecules using reactive silanes.

It has been beneficial to industry to have this approach available to alter organic molecules to achieve certain new molecules. See, for example, Poole, C.F., Recent Advances in Silylation of Organic Compounds for Gas Chromatography, Chapter 4, "Handbook of Derivatives for Chromatography", K. Blau and G. King, Heyden, London, 1977, pages 152—200. Those skilled in the art have extrapolated silylation of organic molecules to silylation of inorganic molecules and materials as well. For example, it is known that silicas, used as fillers for compounded rubbers, could be treated with reactive silanes such as trimethylchlorosilane and/or hexamethyldisilazane to place trimethylsilyl groups on the surface of such silicas. This treatment arises through the reaction of the hydroxyls on the silica with the reactive silanes. See, for example, Hertl, W. and Hair, M.L., "Reaction of Hexamethyldisilazane with Silica", J. of Phys. Chem., Volume 75, no. 14, 1971 and Chemieloweic, J. and Marrow, B.A., "Alkylation of Silica Surfaces", J. of Coll. and Inter. Sci., volume 94, No. 2, August 1983 and Boksanyi, L. Liardon, O. and Kovats, E., Advances in Coll. and Inter. Sci., 6 (1976), pages 95 to 137.

Porous support materials used in liquid or thin layer chromatography applications also benefit by silylation techniques. Such materials have a very large surface area within their porous interior, so that the exterior surface accounts for less than one percent of the total surface area. Such materials can be in either particulate or non-particulate forms (e.g., coatings). It is common in this art to use reactive silanes to treat such materials to remove accessible reactive hydroxyl groups on the entire surface including that of the porous interior to improve the chromatographic properties of polar molecules. See, for example, L. R. Snyder and J. J. Kirkland, Introduction to Modern Liquid Chromatography, 2nd edition, Wiley-Interscience, N.Y. 1979.

A more significant advance in the silylation art came about by the use of reactive silanes which also contained organofunctional groups to silylate surfaces. The desired result was to create a material having a novel end-use which was dependent on the type of organofunctional group included in the silylating silane. For example, in U.S. Patent No. 4,379,931, issued on April 12, 1983, Plueddemann used unique reactive silanes, for example

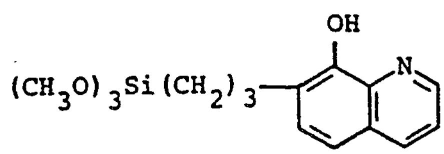

to treat various particulate materials which were then used to extract metal ions from solution.

DE—A—3117732 describes the preparation of a mixed phase composition useful as a chromatographic column packing material. An active component is covalently handed to less than the maximum number of sterically available active sites on a porous support material suitable for use in chromatography and an inert or relatively inert component is covalently bonded to other of the available active sites of the support material. The first residue is formed from an organosilane reagent which may be a weak or strong anion or cation exchange reagent or a reverse phase reagent, the weak anion exchange reagent being preferred, e.g. N,N-diethylaminopropyltrimethoxysilane. The second inert residue is provided by a hydrophilic phase which may be an organosilane-containing diol, diol precursor or amide, e.g. α-glycidoxypropyltrimethoxysilane or N-(3-triethoxysilylpropyl) acetamide.

DE—A—2313073 is concerned with the modification of the surfaces of inorganic solids, particularly for use in chromatography. The hydroxyl groups of porous solids such as silica or silica gel containing hydroxyl groups on their surfaces are reacted, for example, with $C_{1-18}$ alkylhalosilanes so as to form covalent bonds between these hydroxyl groups and alkyl chains into which reactive hetero atoms are introduced, for example, by halogenation or sulphochlorination of the alkyl chains. The latter hetero atoms may then be substituted in order to introduce into the chains various chemically functional groups such as, for example, $SO_3H$, $NH_2$, SH, OH, CN, $NO_2$, $(NR_3)^+$, COOH or cresol groups.

For most of the practical applications known in the prior art, the preferred mode of silylation is that which is carried out in solution. There are, however, some silylation applications wherein the silylation reaction is carried out from the vapor phase. It can be concluded, therefore, that it is generally known in the art to use various reactive silanes to react with hydroxyls on the surfaces of various materials.

What is disclosed in this invention is the use of stable but rapidly reacting silanes to react with the hydroxyls on the exterior surfaces of porous materials, and then the use of a second reactive silane to react

with the hydroxyls on the porous interior surface of the porous material to provide a dual surface material in the sense that the silicon-containing groups attached to the exterior surface are different than the silicon-containing groups on the surface of the porous interior of the material.

Further, it is contemplated that the silicon-containing groups covalently bonded to the exterior surface of the porous material will be predominantly those obtained from the rapidly reacting silane while the silicon-containing groups covalently bonded to the interior surface of the porous material will be predominantly those obtained from the second reactive silane.

It is believed by the inventors herein that such dual surface materials are unique, having never been disclosed anywhere in the published literature. Such dual surface materials may be prepared by selecting dual groups that independently adjust transport properties to, and chemical activities of, the dual surface materials.

Thus, it is an object of this invention to provide a method for preparing a composition having a dual surface, the method comprising (I) contacting a hydroxyl-bearing porous material with less than a stoichiometric equivalent, based on the hydroxyl content of the porous material, of a rapidly reacting silane; (II) allowing the mixture from (I) to react and form covalent bonds by reaction with the exterior surface hydroxyl groups thereby treating the porous material exterior surface; (III) thereafter, contacting and mixing the treated porous material from (II) with a reactive silane, different than the silane of steps (I) and (II), for a period of time to allow the reactive silane, or its silanol-bearing hydrolysis product, to diffuse into the interior of the porous material and covalently bond by reaction with hydroxyl groups on the interior surface of the porous material, and (IV) subsequently isolating the dual surface porous material from the mixture of (III).

It is a further object of this invention to provide a composition of matter consisting of a porous material having covalently bonded to its exterior surface, nonsilanol-containing silicon groups derived from a rapidly reacting silane and having covalently bonded to the surface of its porous interior silicon-containing groups which are different from those bonded to the exterior surface.

Thus, the ultimate goal of this invention is to provide a method which will give a composition that has a dual surface. What is meant by "dual surface" for purposes of this invention is that the silicon-containing groups covalently bonded by a siloxy bond to the exterior surface of the porous material are different in nature than the silicon-containing groups covalently bonded by siloxy bonds to the porous interior surface of the porous materials.

This goal can be achieved by first reacting the porous materials with a small amount of a stable, rapidly reacting silane to treat the exterior surface of the porous material with little or no diffusion of the silane in its rapidly reacting form into the pores and therefore, little or no treatment within the pores by the rapidly reacting silane, and then, reacting the so-treated porous material with an excess of a second reactive silane different from the first silane, and allowing the reactive silane, or its silanol-bearing hydrolysis product, to diffuse into the pores and covalently bond to the interior surface.

The "rapidly reacting silane" referred to above in connection with the objects of the invention is defined in detail below.

This invention differs from another approach, in that, in a co-pending application (EP—A—0158500) entitled "Porous Materials Having a Dual Surface", filed on even data herewith published on 16.10.85, the inventors prepared dual surface porous materials by using an unstable, highly reactive silane intermediate in the first step of the method as opposed to the use of a stable, rapidly reacting silane used in the first step of this inventive method.

There is one major factor that allows the inventive method to produce the inventive compositions, as claimed, herein. The rapidly reacting silanes are chosen so that they react very rapidly with the exterior surface hydroxyls of the porous materials, and therefore, their physical entry into the pores is severely limited while the exterior hydroxyls are being treated.

In this inventive method then, the first phase of the process requires two steps. The first step, i.e. step (I), requires contacting a porous material with a rapidly reacting silane, and step (II) requires allowing the rapidly reacting silane to react with the porous material to obtain a "treated" porous material. It should be obvious from the discussion above to those skilled in the art that steps (I) and (II) can occur virtually simultaneously. Step (III) is then carried out by contacting the "treated" porous material with a second reactive silane, or its silanol-bearing hydrolysis product, and allowing the reactive silane, or its hydrolysis product, to diffuse into the pores and react with the hydroxyls therein. Subsequently, the desired end-product is isolated from the reaction mixture by some means.

For purposes of this invention, in steps (I) and (II), the rapidly reacting silanes are selected from those that are known in the art to react very rapidly with hydroxyl groups. Such silanes are those whose rate of reaction, with surface hydroxyls of hydroxylated porous materials, is fast enough that the silanes do not have time to significantly diffuse into the porous interior of the porous material. Thus, factors which influence the selection of the silanes that are useful in the first steps of the inventive method are the leaving groups, which should be selected from those which generally display a rapid rate of reaction with hydroxyl groups; the type of substitution on the silane such that the leaving groups on the silane are compatible, i.e. non-reactive, with any organofunctional group on the silane molecule so that the highly reactive silane is stable in the absence of hydroxyl groups; the properties that one desires from the permanent groups that are left on the silane molecule after covalent attachment to the exterior surface; and the combination of

groups substituted on silicon such that steric hinderance will not too severely slow the rate of reaction with the exterior hydroxyl groups.

The rapidly reacting silanes useful in the first step of this invention are those silanes selected from a group consisting of

(i) disubstituted amides wherein the amides are selected from a group consisting of

(a) N,N-disubstituted amides having the general formula

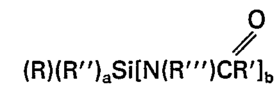 and

(b) N,O-disubstituted amides having the general formula

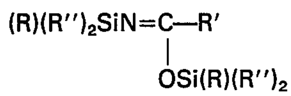

wherein in said formulae, R is selected from hydrogen, allyl, vinyl and Q wherein Q is selected from a group consisting of

(a) alkyl groups having less than twenty carbon atoms,
(b) aryl groups having less than twenty carbon atoms,
(c) $-(CH_2)_2CF_3$,
(d) $-(CH_2)_3Cl$,
(e) $-(CH_2)_3SR^{iv}$,
(f) $-(CH_2)_3NR_2^{iv}$,
(g) $-(CH_2)_3N(R^{iv})(CH_2)_2N(R^{iv})_2$,
(h) $-(CH_2)_3OCH_2CHCH_2$, 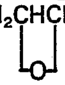

(i) 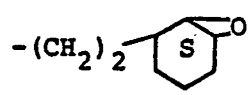 ,

(j) $-(CH_2)_3OC(O)C(CH_3)=CH_2$ and

(k) 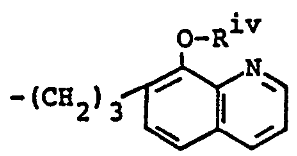 ;

wherein R'' is independently selected from methyl, ethyl and phenyl groups; R''' is selected from methyl, ethyl and phenyl groups; R' is a substituted or unsubstituted alkyl group of from 1 to 6 carbon atoms or hydrogen; $R^{iv}$ is selected from methyl, ethyl and phenyl groups; *a* + *b* has a value of 3 and neither *a* nor *b* has a value of zero;

(ii) substituted amines wherein the amines are selected from a group consisting of

(a) N,N,N-trisubstituted amines having the general formula $(R^v)(R^{vi})_cSi(NR^{vii}_2)_d$ and

(b) heterocyclic amines, wherein the heterocyclic amines are selected from the group consisting of

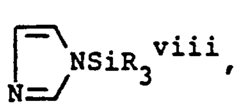 , 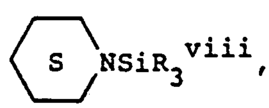 ,

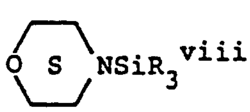 and 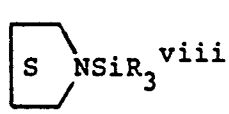

wherein in said formulae $R^v$ and $R^{viii}$ are each independently selected from a group consisting of hydrogen, allyl, vinyl and Q' wherein Q' is selected from a group consisting of

(a) alkyl groups having less than twenty carbon atoms,
(b) aryl groups having less than twenty carbon atoms,
(c) $-(CH_2)_2CF_3$,
(d) $-(CH_2)_3SR^{ix}$

(e) —$(CH_2(_3NR_2^{iv}$,
(f) —$(CH_2)_3N(R^{ix})(CH_2)_2N(R^{ix})_2$,
(g) —$CH_2)_3OCH_2CHCH_2$

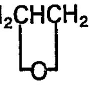

(h) 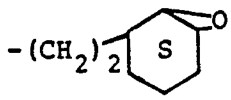 ,

(i) —$(CH_2)_3OC(O)C(CH_3){=}CH_2$ and

(j) 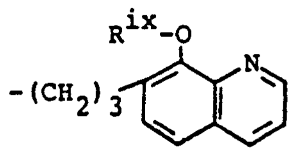 ;

wherein $R^{vii}$ is independently selected from methyl, ethyl and phenyl groups; $R^{vii}$ is independently selected from methyl, ethyl and phenyl groups; $R^{ix}$ is independently selected from alkyl groups of 1 to 6 carbon atoms and phenyl groups; $c + d$ has a value of 3 and neither $c$ nor $d$ has a value of zero; and

(iii) thioethers selected from the group consisting of (a) thioethers having the general formula $R^xR_2^{xi}SiSR^{vii}$ and (b) thioethers having the general formula $(R^xR_2^{xi}Si)_2S$ wherein in said formulae, $R^x$ is selected from a group consisting of hydrogen, allyl, vinyl and Q″ wherein Q″ is selected from a group consisting of

(a) alkyl groups having less than twenty carbon atoms,
(b) aryl groups having less than twenty carbon atoms
(c) —$(CH_2)_2CF_3$,
(d) —$(CH_2)_3SR^{xiii}$,
(e) —$(CH_2)_3NR_2^{xiii}$,
(f) —$(CH_2)_3N(R^{xiii})(CH_2)_2N(R^{xiii})_2$,
(g) —$(CH_2)_3OCH_2CHCH_2$,

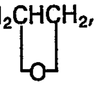

(h) 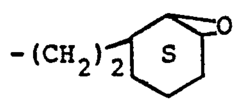 ,

(i) —$(CH_2)_3OC(O)C(CH_3){=}CH_2$ and

(j) 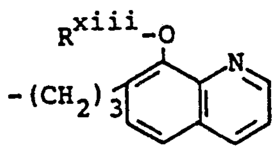 ,

wherein $R^{xi}$ is independently selected from methyl, ethyl and phenyl groups; $R^{xii}$ and $R^{xiii}$ are each independently selected from alkyl groups having 1 to 6 carbon atoms and phenyl.

The porous materials found useful in this invention are those materials which are porous solids having hydroxyl groups on their surfaces. Such materials for example are silica, silica gel, alumina, stannia, titania, zirconia, and the like. Also, these materials can be porous glass, porous ceramic or plastic as long as the material has, or will form, hydroxyl groups on its surface.

The form of the porous material is not overly critical. Particulate porous materials, as well as filaments, slabs, discs, blocks, spheres, films and other such forms can be used in this invention. Also contemplated within the scope of this invention is the treatment of particulate materials by the process of this invention, and the subsequent forming of the treated particulate materials into slabs, discs, blocks, spheres, films, membranes, sheets, and the like.

Preferred for this invention are the porous metalloid and metallic oxides such as silica, alumina, stannia and titania in all of their related forms. Most preferred are the silicas. Also contemplated within the scope of this invention are porous mixed metallic oxides such as $Na_2O$: $Al_2O_3$: $5SiO_2$: $nH_2O$, wherein n is the moles of water of hydration, and the like.

Preferred for this invention is the method whereby the rapidly reacting silane is gradually added to a rapidly stirred solvent which is in direct contact with the porous material. The rapidly reacting silane makes immediate contact with the porous material and decreases the chances of non-uniform use of the reactive silane intermediate.

Also contemplated within the scope of this invention is the method wherein steps (i) and (II) are carried out in the vapor phase by causing the vapors of the reactive silane to contact and react with the porous material.

For example, the porous material is placed in a vacuum reactor and dried under vacuum. The rapidly reacting silane is then allowed to enter the vacuum chamber as a vapor and contact the porous material and after a certain contact time, the byproducts of the reactions are removed by vacuum, the vacuum is released, and the porous material removed from the chamber.

As steps (I) and (II) are carried out, it is preferred that the stoichiometry of the reaction between the rapidly reacting silane and the surface hydroxyls is a "starved" stoichiometry, in the sense that there is used much less rapidly reacting silane than would be necessary to react with all of the hydroxyls available on the entire surface of the porous material. Thus, by using this "starved" stoichiometry, one enhances the chances that all of the exterior surface hydroxyls that are accessible will be reacted with the rapidly reacting silane but the porous interior hydroxyls will not, owing to the fact that there simply is not enough rapidly reacting silane to react with all of the hydroxyls of the porous material, and not all of the surface hydroxyls are available for reaction since once the surface hydroxyls are contacted by the silane and reacted with them, the effects of steric hinderance start to reduce the number of surface hydroxyls that are accessible by the silane. Thus, it is obvious that the material resulting from steps (I) and (II) has little or no reactant on the interior surface hydroxyls and therefore, when the "treated" product from steps (I) and (II) is subjected to step (III) of this inventive process, the moiety resulting from the second reactive silane will be found on the interior surface of the pores, resulting in a "purer" dual surface material.

Steps (I) and (II) can be carried out in a period of time of from 1 minutes to 24 hours. Generally, for purposes of this invention, it is preferred to carry out steps (I) and (II) over about a 30 minute to 6 hour time period to ensure that the exterior surface of the porous material is uniformly treated.

The temperature at which steps (I) and (II) are carried out is not narrowly critical and can range from 0°C to 400°C. Preferred is a room temperature to 200°C reaction mixture temperature.

The amount of rapidly reacting silane useful in this invention depends on the number of exterior surface hydroxyls to be reacted. Typically, a stoichiometric equivalent to the exterior surface hydroxyls plus some excess of the rapidly reacting silane is required to treat the surface hydroxyls because of the potential side reactions involved. Typically, 50 to 1000% excess is used. This excess is with respect to the exterior hydroxyl groups. With respect to the total hydroxyls on both the exterior and interior surfaces, the amount of the rapidly reacting silane usually amounts to about .001 to 1%. If it is desirable to achieve a somewhat thicker exterior surface treatment, then obviously, somewhat more rapidly reacting silane should be used.

Silanes such as N-(1,1,1-trifluoropropyldimethylsilyl)N-methylacetamide can be used to provide a hydrophobic environment for the exterior surface. N-(vinyldimethylsilyl)N-methylacetamide is an excellent silane to use in this invention because it leaves the vinyldimethylsilyl group on the exterior surface of the porous material. The vinyl group is valuable because once the vinyl group is attached to the surface of the porous material, conventional organic reactions can be used to add to the vinyl group thus reacting yet another type of group on the surface of the porous material. For example, when the porous material is treated with N-(vinyldimethylsilyl)N-methylacetamide, one can add $HSCH_2COOH$ to the resulting vinyl dimethyl silyl to give a surface group such as $HOOCCH_2S(CH_2)_2(CH_3)_2SiOSi\equiv$. Using bis(dimethylsilyl)N-methylacetamide gives a surface treatment such as $H(CH_3)_2SiOSi\equiv$ which can also be further reacted with unsaturated molecles to provide further modifications to the surface of the porous material through silicon hydride addition to unsaturated compounds.

In the second phase of the method, i.e. step (III), the material obtained by steps (I) and (II) is contacted with a reactive silane. It should be noted that steps (I) and (II) deal with a "rapidly reacting silane" while step (III) deals with a "reactive silane". For purposes of this invention, what is meant by "reactive silane" is that the silane will react with the surface hydroxyls. This reaction is preferably carried out in bulk solution as the reactive silanes are often neither reactive enough nor volatile enough to use as vapors. Thus, the reactants are mixed together in a solvent solution, with our without, heating. The object of step (III) is to permit the diffusion of the reactive silane into the pores of the porous material and to allow reaction of this silane with the hydroxyl groups that are covalently bonded to the interior surface. In many instances, it is actually the silanol-bearing hydrolysis product of the reactive silane which reacts with the interior surface hydroxyl groups. Such hydrolysis products form from adsorbed water in the porous material. Since the accessible exterior surface hydroxyls of the porous material have been effectively removed by the rapidly reacting silane in steps (I) and (II), the reactive silane does not have available to it accessible reactive sites on the exterior surface of the porous material. Thus, the reactive silane has only the hydroxyls remaining on the interior surfaces of the porous material available for reaction.

Therefore, step (III) must be carried out for a sufficient period of time to allow for the diffusion of the reactive silane into the porous and reaction of the silanes with the interior hydroxyl group therein (or hydrolysis of the silane and then diffusion of the hydrolyzate into the pore to react). Some of the more highly reactive silanes do not require hydrolysis prior to reaction with the interior hydroxyl groups and may also be used as vapors.

Step (III) can be carried out for a period of time of from several minutes to several hours. As indicated above, this phase of the process depends on the rate of hydrolysis of the reactive silane and the rate of

diffusion of the silane, or its hydrolysis product, into the pores of the porous material. Preferred for this invention is a reaction time for step (III) of from 10 minutes to 24 hours. Most preferred is a time of 1 to 6 hours.

The temperature at which step (III) is carried out is more critical than steps (I) and (II), yet it is not narrowly critical. As one would expect, increased temperatures enhance the rate of reaction. Increasing the temperature does not appear to promote too many undesirable side reactions. Thus, the temperature used in step (III) can range from 0°C to 300°C. Most preferred is the reflux temperature of the reaction at about 70°C to 120°C.

The amount of reactive silane useful in this invention depends on how many of the surface hydroxyls of the pore interior one wishes to treat. An excess of the reactive silane may be used as this reactive silane does not displace any of the exterior surface groups obtained by steps (I) and (II). Typically, a stoichiometric quantity, based on reactive hydroxyls of the pore surfaces, is used in step (III) herein.

If the reactive silane is very sluggish (e.g., organosilanol), then the reaction should be catalyzed with acid or base, with the proviso that the minimum catalysis required for completion of the reaction be used. The time and temperature of such catalyzed silylations must be carefully adjusted by trial and error to attain adequate interior coverage before the displacement of the covalently bound external group begins.

The reactive silanes useful in step (III) of this invention are those kinds of silanes which are recognized as conventional silylation reagents. Thus, the silanes that are defined as useful in steps (I) and (II) of this invention are also useful in this step of the invention as long as the silanes are chosen such that the silane used in steps (I) and (II) is not the same as the silane chosen in step (III) and vice versa.

Other useful silanes are the common silanes such as those having the general formula $R^{xv}_{4-e}SiX_e$ wherein $R^{xv}$ is independently selected from hydrogen, alkyl groups having 1 to 4 carbon atoms, phenyl, vinyl and allyl; X is a hydrolyzable radical selected from chlorine, alkoxy having 1 to 4 carbon atoms, acetoxy, amine and amido radicals; and *e* has a value of 1, 2 or 3.

Such silanes and the processes for their manufacture are known in the art and it does not appear that such processes need be set forth in detail herein.

Specific silanes which are useful herein include: trimethylchlorosilane; dimethyldichlorosilane; hexamethyldisilazane; N,N'-bis(trimethylsilyl)urea; N-trimethylsilyldiethylamine; N-trimethylsilylimidazole; N,O-bis(trimethylsilyl)acetamide; N,O-bis(trimethylsilyl)trifluoroacetamide); N-methyl-N-trimethylsilyltrifluoroacetamide; t-butyldimethylsilylimidazole; N-trimethylsilylacetamide; N-trimethylsilylpiperidine; hexamethyldisilthiane; O-trimethylsilylacetate; O-trimethylsilyltrifluoroacetate; N-trimethylsilyldimethylamine; N-trimethylsilylmorpholine; N-trimethylsilylpyrrolidine; and N-trimethylsilylacetanilide.

Yet another aspect of this invention is the use in step (III) of organofunctional silanes to silylate the porous material. Such silanes useful in this invention include, for example, (alpha-methacryloxypropyl)-trimethoxysilane; (4-aminopropyl)trietoxysilane; {gamma-(beta-aminoethylamino)propyl}trimethoxysilane; (gamma-glycidoxypropyl)trimethoxysilane; {beta-(3,4-epoxycyclohexyl)-ethyl}trimethoxysilane; (beta-mercaptoethyl)trimethoxysilane; (gamma-mercaptopropyl)trimethoxysilane; (gamma-chloropropyl)trimethoxysilane;

$$CH_2{=}CHC_6H_4CH_2NH(CH_2)_2NH(CH_2)_3Si(OCH_3)_3\cdot HCl;$$

$$(CH_3O)_3Si(CH_2)_3\overset{\oplus}{N}(CH_3)_2C_{18}H_{37}Cl^-;$$

$$(CH_3)_3Si(CH_2)_3\overset{\oplus}{N}(CH_3)_2C_{12}H_{25}Cl^-;$$

$$(CH_3O)_3Si(CH_2)_3\overset{\oplus}{N}CH_3(C_{12}H_{25})_2Cl^-;$$

$(CH_3O)_3Si(CH_2)_3$ 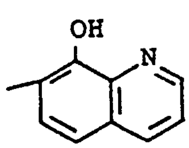 ;

$$(CH_3O)_3Si(CH_2)_9CH_3;\quad (CH_3O)_3Si(CH_2)_{19}CH_3$$

and the like. These silanes will impart a variety of useful chemical properties to the porous interior surface which can be usefully combined with valuable transport properties of the exterior surface groups. For example, the exterior groups may enhance the ion selectivity of chelating groups covalently bonded to the interior surface.

When it is determined that the reaction in step (III) is essentially finished, the product is typically isolated from the reaction mixture. Thus, step (IV) of this process is the isolation of such products from the reaction mixture. This can be accomplished in a number of ways. For example, the liquid can be decanted,

the porous material washed and the liquid decanted, successively, or the reaction mixture can be filtered to remove the liquid from the solid product. The final product can be used in this form or it can be dried. If the final product is other than particulate in form, it can be used as is or it can be further shaped and formed without losing beneficial properties. If the material is in a particulate form it can be used as is or it can be compressed, sintered, or otherwise formed.

It is also contemplated within the scope of this invention to prepare a dual surface porous material by eliminating step (III) of the defined process. The elimination of step (III) of the process results in an "intermediate" product wherein the surface of the porous material is first treated by steps (I) and (II) to provide a treated porous material having nonsilanol-containing silicon groups on the exterior surface and hydroxyl groups on the porous interior surface.

Thus, this invention also consists of a method of preparing a dual surface porous material which comprises

(A) contacting a hydroxyl-bearing porous material with less then a stoichiometric equivalent, based on the hydroxyl content of the porous material, of a rapidly reacting silane;

(B) allowing the mixture from (A) to react and form covalent bonds by reaction with the exterior surface hydroxyl groups thereby treating the porous material exterior surface;

(C) subsequently isolating the dual surface porous material from the mixture (B).

Also included within the scope of this invention are the compositions which are intermediates. These compositions consist of a porous material having reacted to its exterior surface, nonsilanol-containing silicon groups, derived from a rapidly reacting silane and whose porous interior surface contains hydroxyls.

The "rapidly reacting silane" is in accordance with the definition given above.

These intermediates are useful products for the method disclosed supra for providing dual surface materials using reactive silane to treat the interior pore surfaces.

The dual-surface porous materials of this invention are useful for chelating metals from solution, among other things. The materials, whose surfaces are capable of further modification, such as $H(CH_3)_2SiO$— and $CH_2{=}CH(CH_3)_2SiO$— are useful intermediates in the preparation of other surface-modified porous materials.

Now, so that those skilled in the art may appreciate and understand the invention described herein, the following examples are offered for illustration purposes only. The examples should not be construed as limiting the invention as defined in the claims.

Example 1

Porous silica gel discs were prepared by pressing 0.5 gms of silica gel obtained from J. T. Baker Co., Phillipsburg, N. J., U.S.A. (No. 3405—01 chromatographic beads, 60—200 mesh, 60 angstrom units pore diameter, 300 $m^2/gm$) in a 1—$\frac{1}{4}$ inch die for 30 seconds at 30,000 psi. The discs were broken in half and cleaned by heating in a Lindberg Box furnace for 4 hours at 500°C. The disc halves were then stored for a minimum of 24 hours in a moist carbostat to rehydroxylate the surface while retaining the cleanliness of the disc half. The carbostate is an aluminum dessicator contining aluminum shot. Its cleanliness had been assured by regenerating the shot at 500°C for four hours in the Lindberg furnace prior to use. Rehydroxylation conditions were attained by placing a plan of distilled water in the carbostat.

For the silylation reaction of step (I) and step (II) 1,1,1-trifluoropropyldimethylsilyl-N-methylacetamide was used. Two halves of the cleaned and rehydroxylated discs weighing 0.25 gms each were placed in an ultrahigh vacuum reactor designed and built by the inventors herein. The need for ultrahigh vacuum can be appreciated by considering that at a pressure $10^{-6}$ torr, an otherwise clean surface can be covered by a monolayer of residual gas molecules, mostly water and hydrocarbons, in about two seconds. In the case of partially dehydroxylated silica, this leads to uncontrolled rehydroxylation prior to silylation, as well as, interference by the chemisorbed organics. This is not a critical factor in the silylation reactions on the porous material in a commercialization mode, but this is a fairly critical factor in attempting to establish what affect the silylation reactions have on the porous material for the purpose of establishing that the invention herein is operative.

The half discs were dried at 200°C for 2 hours under vacuum, and then the reactor was cooled to room temperature and the source of the vacuum was shut off and the vaporous silane indicated above was allowed to enter the chamber containing the half discs for 8 seconds. This time of exposure was calculated based on the approximate number of hydroxyls on the exterior surface of the discs to provide exterior treatment but little or no interior pore treatment. After 8 seconds of flow time, the silane flow was shut off and the silane was allowed to react with the hydroxyls of the discs for a period of 30 minutes. The system was then evacuated overnight (about 16 hours) to a presure of $10^{-7}$ torr.

The half discs were then exposed to a second reactive silane, trimethylsilyl-N-methylacetamide, by introducing the vaporous silane into the chamber for a period of thirty seconds. The silane and porous material were allowed to contact and react for 30 minutes. No pressure drop occurred after shutting off the flow of silane, suggesting that saturation of the silica discs had occurred. After a two hour evaluation to remove excess reagent and the unreacted silane, the two half discs wer removed. One half disc was ground in an alumina mortar and pestle and analysed for bulk carbon and fluorine, while the other half disc was analyzed using electron spectroscopy for chemical analysis (ESCA). The carbon to silicon and fluorine to

silicon atomic ratios measured by ESCA were corrected for carbon blank and for thin layer effects on the measured composition. ESCA detects about the first 50 angstrom units of thickness of material and thus it essentially detects only the exterior treatment in as much as the silica gel used in this example had a pore diameter of about 60 angstrom units. The corrected carbon to silicon and fluorine to silicon ratios where then used to infer the mole percents of $CF_3CH_2CH_2(CH_3)_2Si$— and $(CH_3)_3Si$— on the exterior surface of the silica gel. The mole percent were determined for the interior surface by the use of the bulk wieght percent carbon and fluorine in the usual manner and correcting for the amounts detected in a similar but untrated silica gel disc. Bulk analysis is appropriate for such characterization because the interior surface accounts for more than 99% of the total surface area in porous materials.

The analysis showed that the silica gel had been treated 100% with $CF_3CH_2CH_2(CH_3)_2Si$— on the exterior surface and 97% $(CH_3)_3Si$— treatment on its interior pores.

Example 2

When the steps of example 1 were essentially repeated but the exterior surface was treated with trimethylsilyl-N-methylacetamide and the interior surface was treated with 1,1,1-trifluoropropyldimethylsilyl-N-methyl-acetamide, the result was that the surface was treated to 90% with $(CH_3)_3Si$— groups and the interior surface was treated with 34% of $CF_3CH_2CH_2(CH_3)_2Si$— groups.

**Claims**

1. A method of preparing a dual surface, porous material which comprises

(I) contacting a hydroxyl-bearing porous material with less than a stoichiometric equivalent, based on the hydroxyl content of the porous material, of a rapidly reacting silane;

(II) allowing the mixture from (I) to react and form covalent bonds by reaction with hydroxyl groups of said porous material;

(III) thereafter, contacting and mixing the treated porous material from (II) with a second reactive silane, different than the silane of steps (I) and (II), for a period of time to allow the reactive silane, or its silanol-bearing hydrolysis product, to diffuse into the interior of the porous material and covalently bond by reaction with hydroxyl groups on the interior surface of the porous material, and

(IV) subsequently isolating the dual surface porous material from the mixture of (III), characterised in that the first reactive silane is a rapidly reacting silane selected from

(i) disubstituted amides wherein the amides are selected from a group consisting of

(a) N,N-disubstituted amides having the general formula

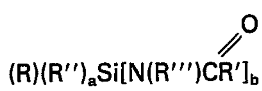 and

(b) N,O-disubstituted amides having the general formula

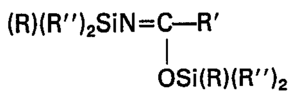

wherein in said formulae, R is selected from hydrogen, allyl, vinyl and Q wherein Q is selected from a group consisting of

(a) alkyl groups having less than twenty carbon atoms,

(b) aryl groups having less than twenty carbon atoms,

(c) $—(CH_2)_2CF_3$,

(d) $—(CH_2)_3Cl$,

(e) $—(CH_2)_3SR^{iv}$,

(f) $—(CH_2)_3NR_2^{iv}$,

(g) $—(CH_2)_3N(R^{iv})(CH_2)_2N(R^{iv})_2$,

(h) 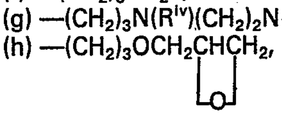,

(i) 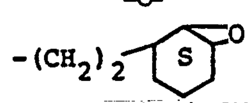 ,

(j) $—(CH_2)_3OC(O)C(CH_3)=CH_2$ and

(k) 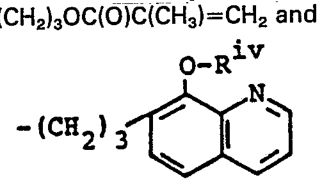 ;

wherein R'' is independently selected from methyl, ethyl and phenyl groups; R''' is selected from methyl, ethyl and phenyl groups; R' is a substituted or unsubstituted alkyl group of from 1 to 6 carbon atoms or hydrogen; $R^{iv}$ is selected from methyl, ethyl and phenyl groups; *a* + *b* has a value of 3 and neither *a* nor *b* has a value of zero;

(ii) substituted amines wherein the amines are selected from a group consisting of

(a) N,N,N-trisubstituted amines having the general formula $(R^{v})(R^{vi})_cSi(NR^{vii}_2)_d$ and

(b) heterocyclic amines, wherein the heterocyclic amines are selected from the group consisting of

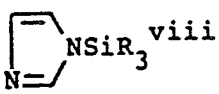, 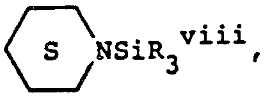,

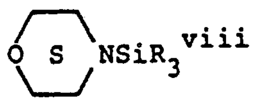 and 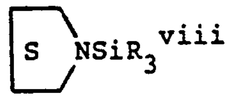

wherein in said formulae $R^{v}$ and $R^{viii}$ are selected from a group consisting of hydrogen, allyl, vinyl and Q' wherein Q' is selected from a group consisting of

(a) alkyl groups having less than twenty carbon atoms,
(b) aryl groups having less than twenty carbon atoms,
(c) $-(CH_2)_2CF_3$,
(d) $-(CH_2)_3SR^{ix}$
(e) $-(CH_2)_3NR_2^{ix}$
(f) $-(CH_2)_3N(R^{ix})(CH_2)_2N(R^{ix})_2$,
(g) $-(CH_2)_3OCH_2CHCH_2$
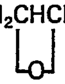

(h) 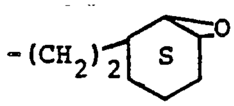,

(i) $-(CH_2)_3OC(O)C(CH_3)=CH_2$ and

(j) 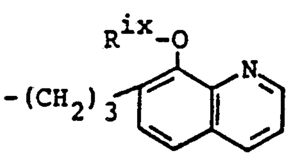;

wherein $R^{vi}$ is independently selected from methyl, ethyl and phenyl groups; $R^{vii}$ is independently selected from methyl, ethyl and phenyl groups; $R^{ix}$ is independently selected from alkyl groups of 1 to 6 carbon atoms and phenyl groups; *c* + *d* has a value of 3 and neither *c* nor *d* has a value of zero; and

(iii) thioethers selected from the group consisting of (a) thioethers having the general formula $R^{x}R_2^{xi}SiSR^{xii}$ and (b) thioethers having the general formula $(R^{x}R_2^{xi}Si)_2S$ wherein in said formulae, $R^{x}$ is selected from a group consisting of hydrogen, allyl, vinyl and Q'' wherein Q'' is selected from a group consisting of

(a) alkyl groups having less than twenty carbon atoms,
(b) aryl groups having less than twenty carbon atoms
(c) $-(CH_2)_2CF_3$,
(d) $-(CH_2)_3SR^{xiii}$,
(e) $-(CH_2)_3NR_2^{xiii}$,
(f) $-(CH_2)_3N(R^{xiii})(CH_2)_2N(R^{xiii})_2$,
(g) $-(CH_2)_3OCH_2CHCH_2$,
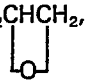

(h) 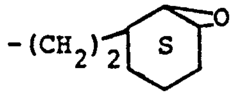,

(i) $-(CH_2)_3OC(O)C(CH_3)=CH_2$ and

(j) 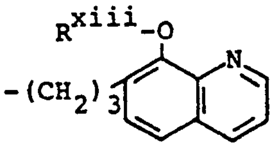 ,

wherein $R^{xi}$ is independently selected from methyl, ethyl and phenyl groups; $R^{xii}$ is independently selected from methyl, ethyl and phenyl groups, $R^{xiii}$ is independently selected from alkyl groups having 1 to 6 carbon atoms and phenyl, said covalent bonds in said reaction (II) being formed by reaction with exterior surface hydroxyl groups of the porous material exterior surface.

2. A method as claimed in Claim 1, wherein in step (I), the rapidly reacting silane is gradually added to a liquid suspension of the porous material.

3. A method as claimed in Claim 1, wherein in step (I), the rapidly reacting silane is gradually added to a rapidly stirred solvent which is in direct contact with non-particulate porous material.

4. A method as claimed in Claim 1, wherein in step (I), the rapidly reacting silane as a vapor in a vacuum is intimately contacted with the porous material.

5. A method as claimed in Claim 1, wherein in step (I), a carrier gas is used to bring the vapor of the rapidly reacting silane into contact with the porous material.

6. A composition of matter comprising a dual surface porous material having reacted therewith (I) nonsilonol-containing silicon groups, and (II) silicon-containing groups different from said non-silicon containing silicon groups and reacted with the porous interior surface of the porous material characterised in that the nono-silanol containing silicon groups (I) are reacted with exterior surface hydroxyl groups of the exterior surface of the porous material and are derived from a rapidly reacting silane selected from (i) disubstituted amides wherein the amides are selected from a group consisting of

(a) N,N-disubstituted amides having the general formula

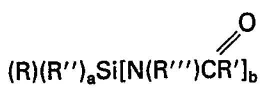 and

(b) N,O-disubstituted amides having the general formula

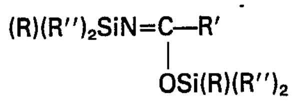

wherein in said formulae, R is selected from hydrogen, allyl, vinyl and Q wherein Q is selected from a group consisting of

(a) alkyl groups having less than twenty carbon atoms,
(b) aryl groups having less than twenty carbon atoms,
(c) $—(CH_2)_2CF_3$,
(d) $—(CH_2)_3Cl$,
(e) $—(CH_2)_3SR^{iv}$,
(f) $—(CH_2)_3NR_2^{iv}$,
(g) $—(CH_2)_3N(R^{iv})(CH_2)_2N(R^{iv})_2$,
(h) 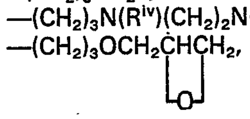

(i) 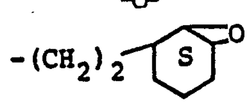 ,

(j) $—(CH_2)_3OC(O)C(CH_3)=CH_2$ and

(k) 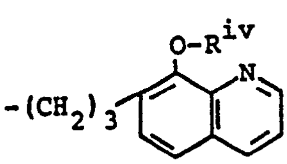 ;

wherein R'' is independently selected from methyl, ethyl and phenyl groups; R''' is selected from methyl, ethyl and phenyl groups; R' is a substituted or unsubstituted alkyl group of from 1 to 6 carbon atoms or hydrogen; $R^{iv}$ is selected from methyl, ethyl and phenyl groups; $a + b$ has a value of 3 and neither $a$ nor $b$ has a value of zero;

(ii) substituted amines wherein the amines are selected from a group consisting of

(a) N,N,N-trisubstituted amines having the general formula $(R^{v})\ (R^{vi})_cSi(NR^{vii}{}_2)_d$ and

(b) heterocyclic amines, wherein the heterocyclic amines are selected from the group consisting of

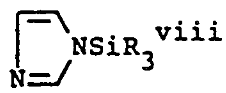, 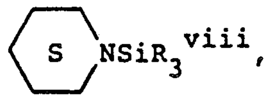,

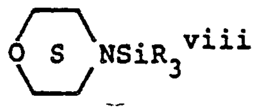 and 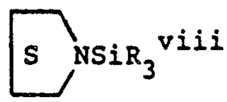

wherein in said formulae $R^v$ and $R^{viii}$ are selected from a group consisting of hydrogen, allyl, vinyl and Q′ wherein Q′ is selected from a group consisting of

(a) alkyl groups having less than twenty carbon atoms,
(b) aryl groups having less than twenty carbon atoms,
(c) $—(CH_2)_2CF_3$,
(d) $—(CH_2)_3SR^{ix}$
(e) $—(CH_2)_3NR_2^{ix}$
(f) $—(CH_2)_3N(R^{ix})(CH_2)_2N(R^{ix})_2$,
(g)$—(CH_2)_3OCH_2CHCH_2$
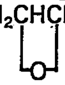

(h) 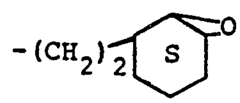 ,

(i) $—(CH_2)_3OC(O)C(CH_3)=CH_2$ and

(j) 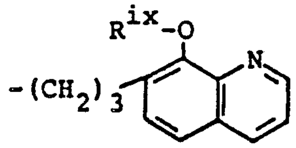 ;

wherein $R^{vi}$ is independently selected from methyl, ethyl and phenyl groups; $R^{vii}$ is independently selected from methyl, ethyl and phenyl groups; $R^{ix}$ is independently selected from alkyl groups of 1 to 6 carbon atoms and phenyl groups; $c + d$ has a value of 3 and neither $c$ nor $d$ has a value of zero; and

(iii) thioethers selected from the group consisting of (a) thioethers having the general formula $R^xR_2^{xi}SiSR^{xii}$ and (b) thioethers having the general formula $(R^xR_2^{xi}Si)_2S$ wherein in said formulae, $R^x$ is selected from a group consisting of hydrogen, allyl, vinyl and Q″ wherein Q″ is selected from a group consisting of

(a) alkyl groups having less than twenty carbon atoms,
(b) aryl groups having less than twenty carbon atoms
(c) $—(CH_2)_2CF_3$,
(d) $—(CH_2)_3SR^{xiii}$,
(e) $—(CH_2)_3NR_2^{xiii}$,
(f) $—(CH_2)_3N(R^{xiii})(CH_2)_2N(R^{xiii})_2$,
(g) $—(CH_2)_3OCH_2CHCH_2$,
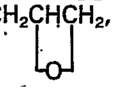

(h) 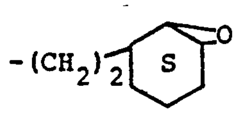 ,

(i) $—(CH_2)_3OC(O)C(CH_3)=CH_2$ and

(j) 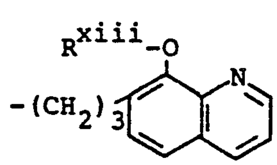 ,

wherein $R^{xi}$ is independently selected from methyl, ethyl and phenyl groups; $R^{xii}$ is independently selected

from methyl, ethyl and phenyl groups, $R^{xiii}$ is independently selected from alkyl groups having 1 to 6 carbon atoms and phenyl.

7. A method of preparing an intermediate for a dual surface, porous material as claimed in Claim 6, which comprises

(A) contacting a hydroxyl-porous material with less than a stoichiometric equivalent, based on the total hydroxyl content of the porous material, of a reactive silane;

(B) allowing the mixture from (A) to react and to form covalent bonds by reaction with hydroxyl groups of said porous material, and

(C) subsequently isolating said intermediate from the mixture of (B), characterised in that said reactive silane is a rapidly reacting silane selected from

(i) disubstituted amides wherein the amides are selected from a group consisting of

(a) N,N-disubstituted amides having the general formula

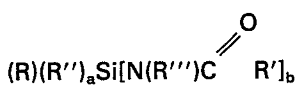 and

(b) N,O-disubstituted amides having the general formula

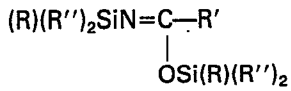

wherein in said formulae, R is selected from hydrogen, allyl, vinyl and Q wherein Q is selected from a group consisting of

(a) alkyl groups having less than twenty carbon atoms,

(b) aryl groups having less than twenty carbon atoms,

(c) $-(CH_2)_2CF_3$,

(d) $-(CH_2)_3Cl$,

(e) $-(CH_2)_3SR^{iv}$,

(f) $-(CH_2)_3NR_2^{iv}$,

(g) $-(CH_2)_3N(R^{iv})(CH_2)_2N(R^{iv})_2$,

(h) 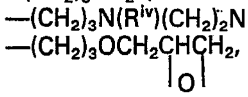,

(i) 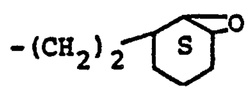,

(j) $-(CH_2)_3OC(O)C(CH_3)=CH_2$ and

(k) 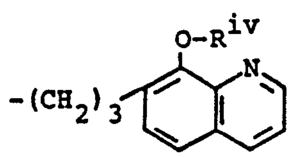 ;

wherein R'' is independently selected from methyl, ethyl and phenyl groups; R''' is selected from methyl, ethyl and phenyl groups; R' is a substituted or unsubstituted alkyl group of from 1 to 6 carbon atoms or hydrogen; $R^{iv}$ is selected from alkyl groups of 1 to 6 carbon atoms and phenyl groups; *a* + *b* has a value of 3 and neither *a* nor *b* has a value of zero;

(ii) substituted amines wherein the amines are selected from a group consisting of

(a) N,N,N-trisubstituted amines having the general formula $(R^v)(R^{vi})_cSi(NR^{vii}_2)_d$ and

(b) heterocyclic amines, wherein the heterocyclic amines are selected from the group consisting of

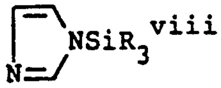, 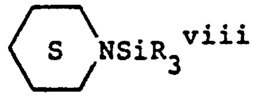,

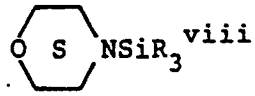 and 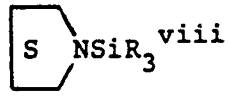

wherein in said formulae $R^v$ and $R^{viii}$ are selected from a group consisting of hydrogen, allyl, vinyl and Q' wherein Q' is selected from a group consisting of

(a) alkyl groups having less than twenty carbon atoms,
(b) aryl groups having less than twenty carbon atoms,
(c) $—(CH_2)_2CF_3$,
(d) $—(CH_2)_3SR^{ix}$
(e) $—(CH_2)_3NR_2^{ix}$
(f) $—(CH_2)_3N(R^{ix})(CH_2)_2N(R^{ix})_2$,
(g) $—(CH_2)_3OCH_2CHCH_2$

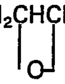

(h) 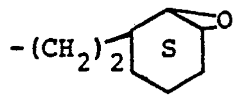 ,

(i) $—(CH_2)_3OC(O)C(CH_3)=CH_2$ and

(j) 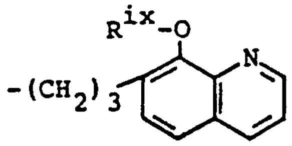 ;

wherein $R^{vi}$ is independently selected from methyl, ethyl and phenyl groups; $R^{vii}$ is independently selected from methyl, ethyl and phenyl groups; $R^{ix}$ is independently selected from alkyl groups of 1 to 6 carbon atoms and phenyl groups; $c + d$ has a value of 3 and neither $c$ nor $d$ has a value of zero; and

(iii) thioethers selected from the group consisting of (a) thioethers having the general formula $R^xR_2^{xi}SiSR^{xii}$ and (b) thioethers having the general formula $(R^xR_2^{xi}Si)_2S$ wherein in said formulae, $R^x$ is selected from a group consisting of hydrogen, allyl, vinyl and Q'' wherein Q'' is selected from a group consisting of

(a) alkyl groups having less than twenty carbon atoms,
(b) aryl groups having less than twenty carbon atoms
(c) $—(CH_2)_2CF_3$,
(d) $—(CH_2)_3SR^{xiii}$,
(e) $—(CH_2)_3NR_2^{xiii}$,
(f) $—(CH_2)_3N(R^{xiii})(CH_2)_2N(R^{xiii})_2$,
(g) $—(CH_2)_3OCH_2CHCH_2$,

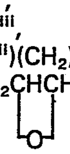

(h) 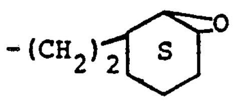 ,

(i) $—(CH_2)_3OC(O)C(CH_3)=CH_2$ and

(j) 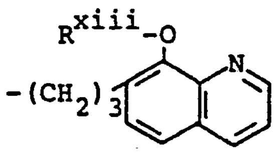 ,

wherein $R^{xi}$ is independently selected from methyl, ethyl and phenyl groups; $R^{xii}$ is independently selected from methyl, ethyl and phenyl groups, $R^{xiii}$ is independently selected from alkyl groups having 1 to 6 carbon atoms and phenyl, and in that said rapidly reacting silane is employed in an amount wich is at least stoichiometric with respect to the exterior surface hydroxyl content of the porous material, said covalent bonds being formed by reaction of said rapidly reacting silane with the exterior surface hydroxyl groups of the porous material exterior surface.

8. An intermediate for a dual surface porous material as claimed in Claim 6 comprising an hydroxyl bearing porous material, the interior pore surface of which contains unreacted hydroxyl groups, characterised in having reacted to the exterior hydroxyl groups of the exterior surface thereof, non-silanol-containing silicon groups derived from a rapidly reacting silane selected from

(1) disubstituted amides wherein the amides are selected from a group consisting of

(a) N,N-disubstituted amides having the general formula

$$(R)(R'')_aSi[N(R''')C(=O)R']_b$$ and

(b) N,O-disubstituted amides having the general formula

$$(R)(R'')_2SiN{=}C{-}R' \quad | \quad OSi(R)(R'')_2$$

wherein in said formulae, R is selected from hydrogen, allyl, vinyl and Q wherein Q is selected from a group consisting of

(a) alkyl groups having less than twenty carbon atoms,
(b) aryl groups having less than twenty carbon atoms,
(c) $-(CH_2)_2CF_3$,
(d) $-(CH_2)_3Cl$,
(e) $-(CH_2)_3SR^{iv}$,
(f) $-(CH_2)_3NR_2^{iv}$,
(g) $-(CH_2)_3N(R^{iv})(CH_2)_2N(R^{iv})_2$,
(h) $-(CH_2)_3OCH_2CHCH_2$,
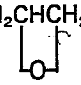

(i) 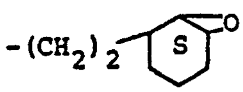 ,

(j) $-(CH_2)_3OC(O)C(CH_3){=}CH_2$ and

(k) 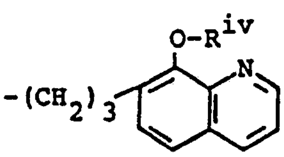 ;

wherein R'' is independently selected from methyl, ethyl and phenyl groups; R''' is selected from methyl, ethyl and phenyl groups; R' is a substituted or unsubstituted alkyl group of from 1 to 6 carbon atoms or hydrogen; $R^{iv}$ is selected from alkyl groups of 1 to 6 carbon atoms and phenyl groups; $a + b$ has a value of 3 and neither $a$ nor $b$ has a value of zero;

(ii) substituted amines wherein the amines are selected from a group consisting of
(a) N,N,N-trisubstituted amines having the general formula $(R^v)(R^{vi})_cSi(NR^{vii}{}_2)_d$ and
(b) heterocyclic amines, wherein the heterocyclic amines are selected from the group consisting of

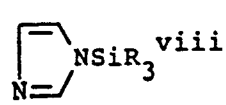 , 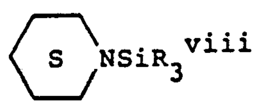 ,

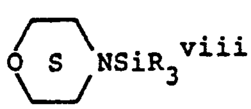 and 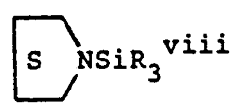

wherein in said formulae $R^v$ and $R^{viii}$ are selected from a group consisting of hydrogen, allyl, vinyl and Q' wherein Q' is selected from a group consisting of

(a) alkyl groups having less than twenty carbon atoms,
(b) aryl groups having less than twenty carbon atoms,
(c) $-(CH_2)_2CF_3$,
(d) $-(CH_2)_3SR^{ix}$
(e) $-(CH_2)_3NR_2^{ix}$
(f) $-(CH_2)_3N(R^{ix})(CH_2)_2N(R^{ix})_2$,
(g) $-(CH_2)_3OCH_2CHCH_2$
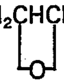

(h) 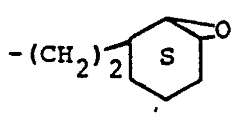 ,

(i) $-(CH_2)_3OC(O)C(CH_3){=}CH_2$ and

(j) 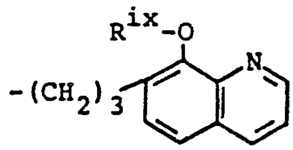 ;

wherein $R^{vi}$ is independently selected from methyl, ethyl and phenyl groups; $R^{vii}$ is independently selected from methyl, ethyl and phenyl groups; $R^{ix}$ is independently selected from alkyl groups of 1 to 6 carbon atoms and phenyl groups; $c + d$ has a value of 3 and neither $c$ nor $d$ has a value of zero; and

(iii) thioethers selected from the group consisting of (a) thioethers having the general formula $R^xR_2^{xi}SiSR^{xii}$ and (b) thioethers having the general formula $(R^xR_2^{xi}Si)_2S$ wherein in said formulae, $R^x$ is selected from a group consisting of hydrogen, allyl, vinyl and Q'' wherein Q'' is selected from a group consisting of

(a) alkyl groups having less than twenty carbon atoms,
(b) aryl groups having less than twenty carbon atoms
(c) $—(CH_2)_2CF_3$,
(d) $—(CH_2)_3SR^{xiii}$,
(e) $—(CH_2)_3NR_2^{xiii}$,
(f) $—(CH_2)_3N(R^{xiii})(CH_2)_2N(R^{xiii})_2$,
(g) 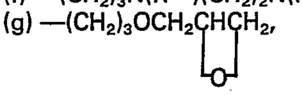

(h) 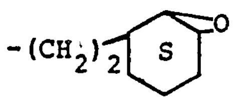 ,

(i) $—(CH_2)_3OC(O)C(CH_3)=CH_2$ and

(j) 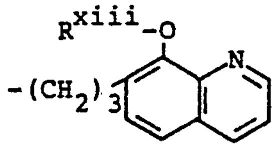 ,

wherein $R^{xi}$ is independently selected from methyl, ethyl and phenyl groups; $R^{xii}$ is independently selected from methyl, ethyl and phenyl groups, $R^{xiii}$ is independently selected from alkyl groups having 1 to 6 carbon atoms and phenyl.

**Patentansprüche**

1. Verfahren zum Herstellen eines porösen Materials mit zwei Oberflächen durch

(I) Inberührungbringen eines Hydroxylgruppen tragenden porösen Materials mit weniger als dem stöchiometrischen Äquivalent bezogen auf den Hydroxylgehalt des porösen Materials eines ersten reaktiven Silans,

(II) Ermöglichen der Reaktion der Mischung von (I) und des Ausbildens von kovalenten Bindungen durch Umsetzen der Hydroxylgruppen des porösen Materials,

(III) anschließendes Inberührungbringen und Mischen des behandelten porösen Materials von (II) mit einem zweiten reaktiven Silan, das sich von dem Silan der Schritte (I) und (II) unterscheidet, während einer Zeit, um dem Reaktiven Silan oder seinem Silanolgruppen aufweisenden Hydrolyseprodukt das Eindiffundieren in das poröse Material und kovalentes Binden durch Umsetzen der Hydroxylgruppen auf der Innenoberfläche des porösen Materials zu ermöglichen und

(IV) anschließendes Isolieren des porösen Materials mit zwei Oberflächen aus der Mischung von (III), dadurch gekennzeichnet, daß das erste reaktive Silan ein schnell reagierendes Silan ist ausgewählt aus

(i) disubstituierten Amiden, wobei diese Amide aus der Gruppe bestehend aus

(a) N,N-disubstituierten Amiden der allgemeinen Formel

$$(R)(R'')_aSi[N(R''')\overset{\overset{\displaystyle O}{\|}}{C}—R']_b$$

und

(b) N,O-disubstituierten Amiden der allgemeinen Formel

$$(R)(R'')_2SiN=\underset{\underset{\displaystyle OSi(R)(R'')_2}{|}}{C}—R'$$

ausgewählt sind, wobei in diesen Formeln R ausgewählt ist aus Wasserstoff, Allyl, Vinyl und Q, wobei Q aus einer Gruppe ausgewählt ist, bestehend aus

(a) Alkylgruppen mit weniger als 20 Kohlenstoffatomen,
(b) Arylgruppen mit weniger als 20 Kohlenstoffatomen,
(c) $—(CH_2)_2CF_3$,
(d) $—(CH_2)_3Cl$,
(e) $—(CH_2)_3SR^{iv}$,
(f) $—(CH_2)_3NR_2{}^{iv}$,
(g) $—(CH_2)_3N(R^{iv})(CH_2)_2N(R^{iv})_2$,
(h) $—(CH_2)_3OCH_2CHCH_2$,
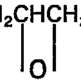

(i) 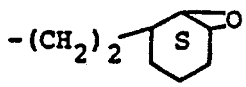

(j) $—(CH_2)_3OC(O)C(CH_3)=CH_2$ und

(k) 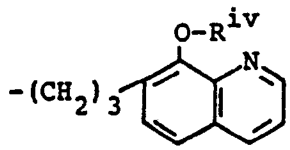

wobei R″ unabhängig ausgewählt ist aus Methyl-, Ethyl-, und Phenylgruppen, R‴ ausgewählt ist aus Methyl-, Ethyl- und Phenylgruppen, R′ eine substituierte oder nicht substituierte Alkylgruppe mit 1—6 Kohlenstoffatomen oder Wasserstoff ist, $R^{iv}$ ausgewählt ist aus Methyl-, Ethyl- und Phenylgruppen, *a* + *b* einen Wert von 3 hat und weder *a* noch *b* den Wert 0 hat,

(ii) substituierten Aminen, wobei diese Amine aus der Gruppe bestehend aus
(a) N,N,N-trisubstituierten Aminen der allgemeinen Formel $(R^{v})(R^{vi})_cSi(NR^{vii}{}_2)_d$ und
(b) heterocyclischen Aminen ausgewählt sind, wobei die heterocyclischen Amine aus der Gruppe ausgewählt sind, bestehend aus

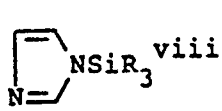, 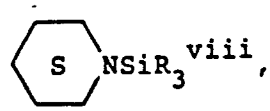,

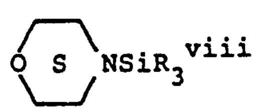 und 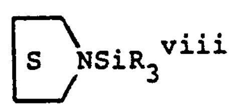

wobei in den Formeln $R^{v}$ und $R^{viii}$ ausgewählt sind aus der Gruppe bestehend aus Wasserstoff, Alkyl, Vinyl und Q′, wobei Q′ aus der Gruppe ausgewählt ist bestehend aus

(a) Alkylgruppen mit weniger als 20 Kohlenstoffatomen,
(b) Arylgruppen mit weniger als 20 Kohlenstoffatomen,
(c) $—(CH_2)_2CF_3$,
(d) $—(CH_2)_3SR^{ix}$,
(e) $—(CH_2)_3NR_2{}^{ix}$,
(f) $—(CH_2)_3N(R^{ix})(CH_2)_2N(R^{ix})_2$,
(g) $—(CH_2)_3OCH_2CHCH_2$,
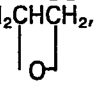

(h) 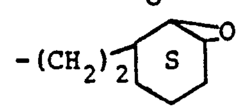

(i) $—(CH_2)_3OC(O)C(CH_3)=CH_2$ und

(j) 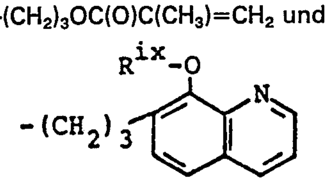

wobei $R^{vi}$ unabhängig ausgewählt ist aus Methyl-, Ethyl- und Phenylgruppen, $R^{vii}$ unabhängig ausgewählt ist aus Methyl-, Ethyl- und Phenylgruppen, $R^{ix}$ unabhängig ausgewählt ist aus Alkylgruppen mit 1—6 Kohlenstoffatomen und Phenylgruppen, $c + d$ einen Wert von 3 hat und weder $c$ noch $d$ einen Wert von 0 hat und

(iii) Thioethern ausgewählt aus der Gruppe bestehend aus

(a) Thioethern der allgemeinen Formel $R^xR_2^{xi}SiSR^{xii}$ und

(b) Thioethern der allgemeinen Formel $(R^xR_2^{xi}Si)_2S$,

wobei in diesen Formeln $R^x$ ausgewählt ist aus der Gruppe bestehend aus Wasserstoff, Allyl, Vinyl und Q'', wobei Q'' ausgewählt ist aus der Gruppe bestehend aus

(a) Alkylgruppen mit weniger als 20 Kohlenstoffatomen,

(b) Arylgruppen mit weniger als 20 Kohlenstoffatomen,

(c) $—(CH_2)_2CF_3$,

(d) $—(CH_2)_3SR^{xiii}$,

(e) $—(CH_2)_3NR_2^{xiii}$,

(f) $—(CH_2)_3N(R^{xiii})(CH_2)_2N(R^{xiii})_2$,

(g) $—(CH_2)_3OCH_2CHCH_2$,

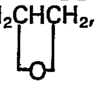

(h) 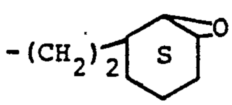

(i) $—(CH_2)_3OC(O)C(CH_3)=CH_2$ und

(j) 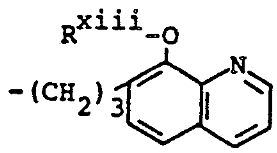

wobei $R^{xi}$ unabhängig ausgewählt ist aus Methyl-, Ethyl- und Phenylgruppen, $R^{xii}$ unabhängig ausgewählt ist aus Methyl-, Ethyl- und Phenylgruppen, $R^{xiii}$ unabhängig ausgewählt ist aus Alkylgruppen mit 1—6 Kohlenstoffatomen und Phenyl,

wobei die kovalenten Bindungen der Reaktion (II) gebildet werden durch Umsetzen mit Außenoberflächenhydroxylgruppen auf der Außenoberfläche des porösen Materials.

2. Verfahren nach Anspruch 1, dadurch gekennzeichnet, daß in Schritt (I) das schnell reagierende Silan schrittweise zu einer flüssigen Suspension des porösen Materials zugefügt wird.

3. Verfahren nach Anspruch 1, dadurch gekennzeichnet, daß in Schritt (I) das schnell reagierende Silan schrittweise zu einem schnell gerührten Lösungsmittel zugesetzt wird, das in direktem Kontakt mit nicht teilchenförmigem porösen Material steht.

4. Verfahren nach Anspruch 1, dadurch gekennzeichnet, daß in Schritt (I) das schnell reagierende Silan als ein Dampf unter Vakuum in innigem Kontakt mit dem porösen Material gebracht wird.

5. Verfahren nach Anspruch 1, dadurch gekennzeichnet, daß in Schritt (I) ein Trägergas verwendet wird, um den Dampf des schnell reagierenden Silans in Berührung mit dem porösen Material zu bringen.

6. Zusammensetzung enthaltend ein poröses Material mit zwei Oberflächen mit dem umgesetzt wurde (I) kein Silanol enthaltende Silicongruppen und (II) Silanolgruppen enthaltende Silicongruppen, die sich von den kein Silanol enthaltenden Gruppen unterscheiden und umgesetzt wurden mit der porösen Innenoberfläche des porösen Materials, dadurch gekennzeichnet, daß die kein Silanol enthaltenden Silicongruppen (I) umgesetzt werden mit Außenoberflächenhydroxylgruppen auf der Außenoberfläche des porösen Materials und abgeleitet sind von einem schnell reagierenden Silan ausgewählt aus

(i) disubstituierten Amiden, wobei die Amide ausgewählt sind aus der Gruppe bestehend aus

(a) N,N-disubstituierten Amiden der allgemeinen Formel

$$(R)(R'')_aSi[N(R''')\overset{\overset{\displaystyle O}{\|}}{C}—R']_b$$

und

(b) N,O-disubstituierten Amiden der allgemeinen Formel

$$(R)(R'')_2SiN=\underset{\underset{\displaystyle OSi(R)(R'')_2}{|}}{C}—R'$$

wobei in diesen Formeln R ausgewählt ist aus Wasserstoff, Allyl, Phenyl und Q, wobei Q aus der Gruppe ausgewählt ist bestehend aus

(a) Alkylgruppen mit weniger als 20 Kohlenstoffatomen,
(b) Arylgruppen mit weniger als 20 Kohlenstoffatomen,
(c) $—(CH_2)_2CF_3$,
(d) $—(CH_2)_3Cl$,
(e) $—(CH_2)_3SR^{iv}$,
(f) $—(CH_2)_3NR_2^{iv}$,
(g) $—(CH_2)_3N(R^{iv})(CH_2)_2N(R^{iv})_2$,
(h) $—(CH_2)_3OCH_2CHCH_2$,

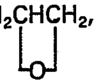

(i) 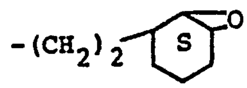

(j) $—(CH_2)_3OC(O)C(CH_3)=CH_2$ und

(k) 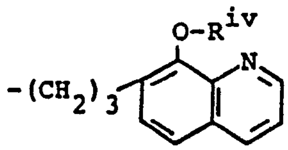

wobei R'' unabhängig ausgewählt ist aus Methyl-, Ethyl-, und Phenylgruppen, R''' ausgewählt ist aus Methyl-, Ethyl- und Phenylgruppen, R' eine substituierte oder nicht substituierte Alkylgruppe mit 1—6 Kohlenstoffatomen oder Wasserstoff ist, $R^{iv}$ ausgewählt ist aus Methyl-, Ethyl- und Phenylgruppen, $a + b$ einen Wert von 3 hat und weder $a$ noch $b$ den Wert 0 hat,

(ii) substituierten Aminen, wobei diese Amine ausgewählt sind aus der Gruppe bestehend aus
(a) N,N,N-trisubstituierten Aminen der allgemeinen Formel $(R^v)(R^{vi})_cSi(NR^{vii}{}_2)_d$ und
(b) heterocyclischen Aminen, wobei die heterocyclischen Aminen aus der Gruppe ausgewählt sind bestehend aus

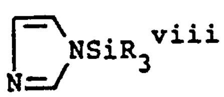 , 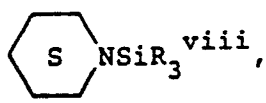 ,

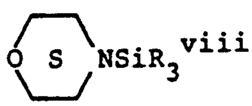 und 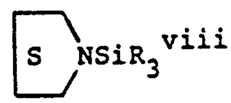

wobei in den Formeln $R^v$ und $R^{viii}$ ausgewählt sind aus einer Gruppe bestehend aus Wasserstoff, Alkyl, Vinyl und Q', wobei Q' aus einer Gruppe ausgewählt ist aus

(a) Alkylgruppen mit weniger als 20 Kohlenstoffatomen,
(b) Arylgruppen mit weniger als 20 Kohlenstoffatomen,
(c) $—(CH_2)_2CF_3$,
(d) $—(CH_2)_3SR^{ix}$,
(e) $—(CH_2)_3NR_2^{ix}$,
(f) $—(CH_2)_3N(R^{ix})(CH_2)_2N(R^{ix})_2$,
(g) $—(CH_2)_3OCH_2CHCH_2$,

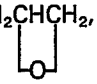

(h) 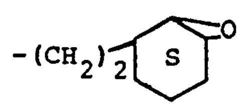

(i) $—(CH_2)_3OC(O)C(CH_3)=CH_2$ und

(j) 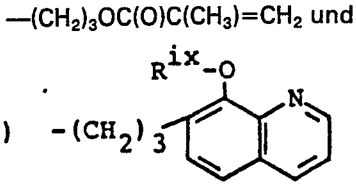

wobei $R^{vi}$ unabhängig ausgewählt ist aus Methyl-, Ethyl- und Phenylgruppen, $R^{vii}$ unabhängig ausgewählt ist aus Methyl-, Ethyl- und Phenylgruppen, $R^{ix}$ unabhängig ausgewählt ist aus Alkylgruppen mit 1—6

Kohlenstoffatomen und Phenylgruppen, *c* + *d* den Wert 3 hat und weder *c* noch *d* den Wert von 0 hat und

(iii) Thioethern ausgewählt aus der Gruppe bestehend aus

(a) Thioethern der allgemeinen Formel $R^xR_2^{xi}SiSR^{xii}$ und

(b) Thioethern der allgemeinen Formel $(R^xR_2^{xi}Si)_2S$,

wobei in diesen Formeln $R^x$ ausgewählt ist aus der Gruppe bestehend aus Wasserstoff, Allyl, Vinyl und Q'', wobei Q'' ausgewählt ist aus der Gruppe bestehend aus

(a) Alkylgruppen mit weniger als 20 Kohlenstoffatomen,

(b) Arylgruppen mit weniger als 20 Kohlenstoffatomen,

(c) $—(CH_2)_2CF_3$,

(d) $—(CH_2)_3SR^{xiii}$,

(e) $—(CH_2)_3NR_2^{xiii}$,

(f) $—(CH_2)_3N(R^{xiii})(CH_2)_2N(R^{xiii})_2$,

(g) $—(CH_2)_3OCH_2CHCH_2$,

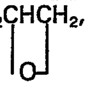

(h) 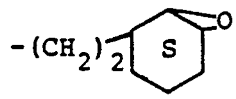

(i) $—(CH_2)_3OC(O)C(CH_3)=CH_2$ und

(j) 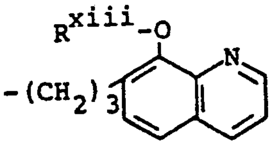

wobei $R^{xi}$ unabhängig ausgewählt ist aus Methyl-, Ethyl- und Phenylgruppen, $R^{xii}$ unabhängig ausgewählt ist aus Methyl-, Ethyl- und Phenylgruppen, $R^{xiii}$ unabhängig ausgewählt ist aus Alkylgruppen mit 1—6 Kohlenstoffatomen und Phenyl.

7. Verfahren zum Herstellen eines Zwischenproduktes für ein poröses Material mit zwei Oberflächen gemäß Anspruch 6, durch

(A) Inberührungbringen der Hydroxylgruppen eines porösen Materials mit weniger als einem stöchiometrischen Äquivalent bezogen auf Gesamthydroxylgehalt des porösen Materials eines reaktiven Silans,

(B) Ermöglichen der Reaktion der Mischung von (A) und des Ausbildens von kovalenten Bindungen durch Umsetzen der Hydroxylgruppen des porösen Materials und

(C) anschließendes Isolieren des Zwischenproduktes aus der Mischung von (B),

dadurch gekennzeichnet, daß das reaktive Silan ein schnell reagierendes Silan ist ausgewählt aus

(i) disubstituierten Amiden, wobei diese Amide aus der Gruppe bestehend aus

(a) N,N-disubstituierten Amiden der allgemeinen Formel

$$(R)(R'')_aSi[N(R''')\overset{O}{\overset{\|}{C}}—R']_b$$

und

(b) N,O-disubstituierten Amiden der allgemeinen Formel

$$(R)(R'')_2SiN=\underset{\underset{OSi(R)—(R'')_2}{|}}{C}—R'$$

ausgewählt sind, wobei in diesen Formeln R ausgewählt ist aus Wasserstoff, Allyl, Vinyl und Q, wobei Q aus einer Gruppe ausgewählt ist bestehend aus

(a) Alkylgruppen mit weniger als 20 Kohlenstoffatomen,

(b) Arylgruppen mit weniger als 20 Kohlenstoffatomen,

(c) $—(CH_2)_2CF_3$,

(d) $—(CH_2)_3Cl$,

(e) $—(CH_2)_3SR^{iv}$,

(f) $—(CH_2)_3NR_2^{iv}$,

(g) $—(CH_2)_3N(R^{iv})(CH_2)_2N(R^{iv})_2$,

(h) $—(CH_2)_3OCH_2CHCH_2$,

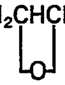

(i) 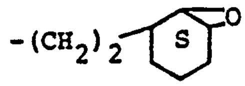

(j) $—(CH_2)_3OC(O)C(CH_3)=CH_2$ und

(k) 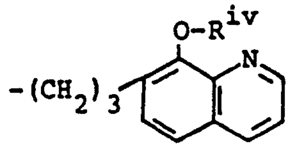

wobei R″ unabhängig ausgewählt ist aus Methyl-, Ethyl-, und Phenylgruppen, R‴ ausgewählt ist aus Methyl-, Ethyl- und Phenylgruppen, R′ eine substituierte oder nicht substituierte Alkylgruppe mit 1—6 Kohlenstoffatomen oder Wasserstoff ist, $R^{iv}$ ausgewählt ist aus Alkylgruppen mit 1—6 Kohlenstoffatomen und Phenylgruppen, $a + b$ einen Wert von 3 hat und weder $a$ noch $b$ einen Wert 0 hat,

(ii) substituierten Aminen, wobei diese Amine aus der Gruppe bestehend aus

(a) N,N,N-trisubstituierten Aminen der allgemeinen Formel $(R^{v})(R^{vi})_cSi(NR^{vii}{}_2)_d$ und

(b) heterocyclischen Aminen ausgewählt sind, wobei die heterocyclischen Amine aus der Gruppe ausgewählt sind bestehend aus

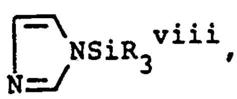, 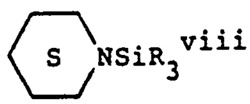,

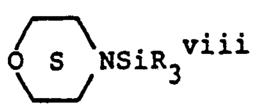 und 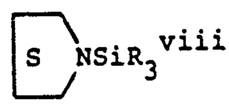

wobei in diesen Formeln $R^{v}$ und $R^{viii}$ ausgewählt sind aus der Gruppe bestehend aus Wasserstoff, Allyl, Vinyl und Q′, wobei Q′ ausgewählt ist aus einer Gruppe bestehend aus

(a) Alkylgruppen mit weniger als 20 Kohlenstoffatomen,

(b) Arylgruppen mit weniger als 20 Kohlenstoffatomen,

(c) $—(CH_2)_2CF_3$,

(d) $—(CH_2)_3SR^{ix}$,

(e) $—(CH_2)_3NR_2{}^{ix}$,

(f) $—(CH_2)_3N(R^{ix})(CH_2)_2N(R^{ix})_2$,

(g) 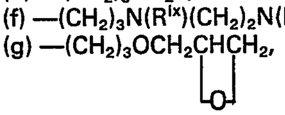

(h) 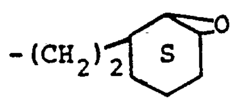

(i) $—(CH_2)_3OC(O)C(CH_3)=CH_2$ und

(j) 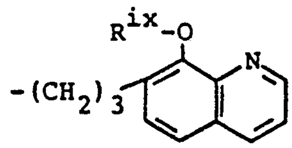

wobei $R^{vi}$ unabhängig ausgewählt ist aus Methyl-, Ethyl- und Phenylgruppen, $R^{vii}$ unabhängig ausgewählt ist aus Methyl-, Ethyl- und Phenylgruppen, $R^{ix}$ unabhängig ausgewählt ist aus Alkylgruppen mit 1—6 Kohlenstoffatomen und Phenylgruppen, $c + d$ einen Wert von 3 hat und weder $c$ noch $d$ den Wert von 0 hat und

(iii) Thioethern ausgewählt aus der Gruppe bestehend aus

(a) Thioethern der allgemeinen Formel $R^{x}R_2{}^{xi}SiSR^{xii}$ und

(b) Thioethern der allgemeinen Formel $(R^{x}R_2{}^{xi}Si)_2S$,

wobei in diesen Formeln $R^{x}$ ausgewählt ist aus der Gruppe bestehend aus Wasserstoff, Allyl, Vinyl und Q″, wobei Q″ ausgewählt ist aus der Gruppe bestehend aus

(a) Alkylgruppen mit weniger als 20 Kohlenstoffatomen,

(b) Arylgruppen mit weniger als 20 Kohlenstoffatomen,
(c) $—(CH_2)_2CF_3$,
(d) $—(CH_2)_3SR^{xiii}$,
(e) $—(CH_2)_3NR_2^{xiii}$,
(f) $—(CH_2)_3N(R^{xiii})(CH_2)_2N(R^{xiii})_2$,
(g) $—(CH_2)_3OCH_2CHCH_2$,
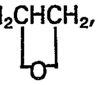

(h) 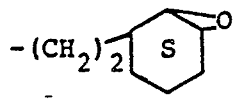

(i) $—(CH_2)_3OC(O)C(CH_3)=CH_2$ und

(j) 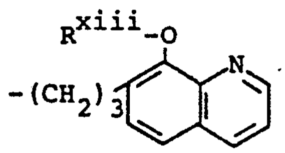

wobei $R^{xi}$ unabhängig ausgewählt ist aus Methyl-, Ethyl- und Phenylgruppen, $R^{xii}$ unabhängig ausgewählt ist aus Methyl-, Ethyl- und Phenylgruppen, $R^{xiii}$ unabhängig ausgewählt ist aus Alkylgruppen mit 1—6 Kohlenstoffatomen und Phenyl,
und daß das schnell reagierende Silan in einer Menge verwendet wird, die mindestens stöchiometrisch zum Außenhydroxylgruppengehalt des porösen Materials ist, wobei die kovalenten Bindungen durch Umsetzen des schnell reagierenden Silans mit den Außenoberflächenhydroxylgruppen der Außenoberfläche des porösen Materials gebildet werden.

8. Zwischenprodukt für ein poröses Material mit zwei Oberflächen gemäß Anspruch 6 enthaltend ein Hydroxylgruppen tragendes poröses Material, dessen Innenporenoberfläche nicht umgesetzte Hydroxylgruppen aufweist, dadurch gekennzeichnet, daß die Außenhydroxylgruppen auf der Außenoberfläche mit Silanolgruppen enthaltenden Silicongruppen umgesetzt sind, die abgeleitet sind von einem schnell reagierenden Silan ausgewählt aus

(i) disubstituierten Amiden, wobei die Amide aus der Gruppe bestehend aus
(a) N,N-disubstituierten Amiden der allgemeinen Formel

$$(R)(R'')_aSi[N(R''')\overset{\overset{O}{\|}}{C}—R']_b$$

und
(b) N,O-disubstituierten Amiden der allgemeinen Formel

$$(R)(R'')_2SiN=\underset{\underset{OSi(R)—(R'')_2}{|}}{C}—R'$$

ausgewählt sind, wobei in diesen Formeln R ausgewählt ist aus Wasserstoff, Allyl, Vinyl und Q, wobei Q aus einer Gruppe ausgewählt ist bestehend aus
(a) Alkylgruppen mit weniger als 20 Kohlenstoffatomen,
(b) Arylgruppen mit weniger als 20 Kohlenstoffatomen,
(c) $—(CH_2)_2CF_3$,
(d) $—(CH_2)_3Cl$,
(e) $—(CH_2)_3SR^{iv}$,
(f) $—(CH_2)_3NR_2^{iv}$,
(g) $—(CH_2)_3N(R^{iv})(CH_2)_2N(R^{iv})_2$,
(h) $—(CH_2)_3OCH_2CHCH_2$,
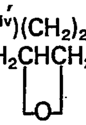

(i) 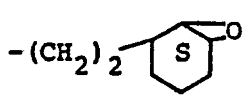

(j) $—(CH_2)_3OC(O)C(CH_3)=CH_2$ und

(k) 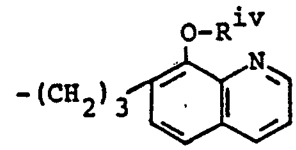

wobei R'' unabhängig ausgewählt ist aus Methyl-, Ethyl-, und Phenylgruppen, R''' ausgewählt ist aus Methyl-, Ethyl- und Phenylgruppen, R' eine substituierte oder nicht substituierte Alkylgruppe mit 1—6 Kohlenstoffatomen oder Wasserstoff ist, $R^{iv}$ ausgewählt ist aus Alkylgruppen mit 1—6 Kohlenstoffatomen und Phenylgruppen, *a* + *b* einen Wert von 3 hat und weder *a* noch *b* den Wert 0 hat,

(ii) substituierten Aminen, wobei diese Amine aus der Gruppe bestehend aus

(a) N,N,N-trisubstituierten Aminen der allgemeinen Formel $(R^{v})(R^{vi})_cSi(NR^{vii}_2)_d$ und

(b) heterocyclischen Aminen ausgewählt sind, wobei die heterocyclischen Amine aus der Gruppe ausgewählt sind bestehend aus

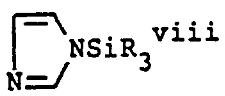, 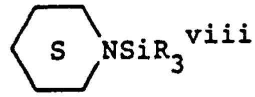,

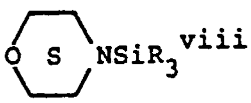 und 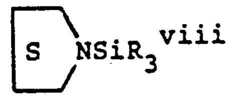

wobei in diesen Formeln $R^{v}$ und $R^{viii}$ ausgewählt sind aus der Gruppe bestehend aus Wasserstoff, Allyl, Vinyl und Q', wobei Q' aus einer Gruppe ausgewählt ist bestehend aus

(a) Alkylgruppen mit weniger als 20 Kohlenstoffatomen,

(b) Arylgruppen mit weniger als 20 Kohlenstoffatomen,

(c) $-(CH_2)_2CF_3$,

(d) $-(CH_2)_3SR^{ix}$,

(e) $-(CH_2)_3NR_2^{ix}$,

(f) $-(CH_2)_3N(R^{ix})(CH_2)_2N(R^{ix})_2$,

(g) $-(CH_2)_3OCH_2CHCH_2$,

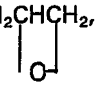

(h) 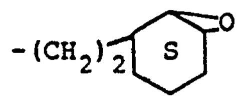

(i) $-(CH_2)_3OC(O)C(CH_3){=}CH_2$ und

(j) 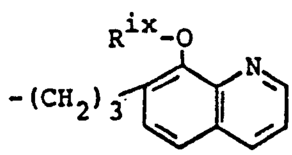

wobei $R^{vi}$ unabhängig ausgewählt ist aus Methyl-, Ethyl- und Phenylgruppen, $R^{vii}$ unabhängig ausgewählt ist aus Methyl-, Ethyl- und Phenylgruppen, $R^{ix}$ unabhängig ausgewählt ist aus Alkylgruppen mit 1—6 Kohlenstoffatomen und Phenylgruppen, *c* + *d* einen Wert von 3 hat und weder *c* noch *d* einen Wert von 0 hat und

(iii) Thioethern ausgewählt aus der Gruppe bestehend aus

(a) Thioethern der allgemeinen Formel $R^xR_2^{xi}SiSR^{xii}$ und

(b) Thioethern der allgemeinen Formel $(R^xR_2^{xi}Si)_2S$,

wobei in diesen Formeln $R^x$ ausgewählt ist aus der Gruppe bestehend aus Wasserstoff, Allyl, Vinyl und Q'', wobei Q'' ausgewählt ist aus einer Gruppe bestehend aus

(a) Alkylgruppen mit weniger als 20 Kohlenstoffatomen,

(b) Arylgruppen mit weniger als 20 Kohlenstoffatomen,

(c) $-(CH_2)_2CF_3$,

(d) $-(CH_2)_3SR^{xiii}$,

(e) $-(CH_2)_3NR_2^{xiii}$,

(f) $-(CH_2)_3N(R^{xiii})(CH_2)_2N(R^{xiii})_2$,

(g) $-(CH_2)_3OCH_2CHCH_2$,

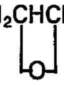

(h) 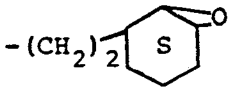

(i) $-(CH_2)_3OC(O)C(CH_3)=CH_2$ und

(j) 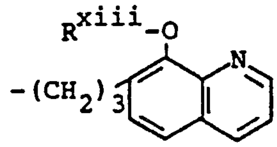

wobei $R^{xi}$ unabhängig ausgewählt ist aus Methyl-, Ethyl- und Phenylgruppen, $R^{xii}$ unabhängig ausgewählt ist aus Methyl-, Ethyl- und Phenylgruppen, $R^{xiii}$ unabhängig ausgewählt ist aus Alkylgruppen mit 1—6 Kohlenstoffatomen und Phenyl.

**Revendications**

1. Procédé pour préparer une matière poreuse à surface double comprenant les opérations suivantes:

(I) mettre une matière poreuse portant des groupes hydroxyle en contact avec moins qu'un équivalent stoechiométrique, par rapport à la quantité de groupes hydroxyle contenue dans la matière poreuse, d'un premier silane réactif;

(II) laisser le mélange venant de (I) réagir et former des liaisons covalentes par réaction avec les groupes hydroxyle de ladite matière poreuse;

(III) ensuite, mettre en contact et mélanger la matière poreuse traitée venant de (II) avec un second silane réactif, différent du silane des étapes (I) et (II), pendant une période de temps suffisante pour permettre au silane réactif, ou à son produit d'hydrolyse portant des groupes silanol, de diffuser à l'intérieur de la matière poreuse et de se lier par covalence par réaction avec les groupes hydroxyle présents sur la surface intérieure de la matière poreuse; et

(IV) isoler par la suite la matière poreuse à surface double du mélange de (III),

caractérisé en ce que le premier silane réactif est un silane réagissant rapidement, choisi parmi

(i) des amides disubstitués, ces amides étant choisis dans un groupe formé par

(a) les amides N,N-disubstitués répondant à la formule générale

$$(R)(R'')_aSi[N(R''')\overset{\overset{\displaystyle O}{\|}}{C}—R']_b$$

et

(b) les amides N,O-disubstitués répondant à la formule générale

$$(R)(R'')_2SiN=\underset{\underset{\displaystyle OSi(R)(R'')_2}{|}}{C}—R'$$

où, dans lesdites formules, R est choisi parmi l'hydrogène, le groupe allyle, le groupe vinyle et Q, Q étant choisi dans un groupe formé par

(a) les groupes alkyle comptant moins de vingt atomes de carbone,

(b) les groupes aryle comptant moins de vingt atomes de carbone,.

(c) $—(CH_2)_2CF_3$,

(d) $—(CH_2)_3Cl$,

(e) $—(CH_2)_3SR^{iv}$,

(f) $—(CH_2)_3NR_2^{iv}$,

(g) $—(CH_2)_3N(R^{iv})(CH_2)_2N(R^{iv})_2$,

(h) $—(CH_2)_3OCH_2CHCH_2$, 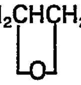

(i) 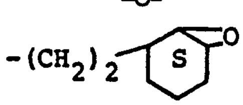 ,

(j) $—(CH_2)_3OC(O)C(CH_3)=CH_2$ et

(k) 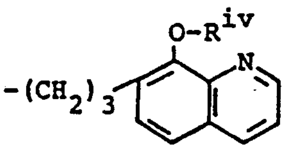

où R'' est indépendamment choisi parmi les groupes méthyle, éthyle et phényle; R''' est choisi parmi les groupes méthyle, éthyle et phényle; R' est un groupe alkyle substitué ou non substitué de 1 à 6 atomes de carbone ou l'hydrogène; $R^{iv}$ est choisi parmi les groupes méthyle, éthyle et phényle; la valeur de $a + b$ est 3 et, ni $a$, ni $b$ n'a la valeur zéro;

(ii) des amines substitués, ces amines étant choisies dans un groupe formé par

(a) les amines N,N,N-trisubstitués répondant à la formule générale $(R^{v})(R^{vi})_cSi(NR^{vii}_2)_d$ et

(b) des amines hétérocycliques, ces amines hétérocycliques étant choisies dans le groupe formé par

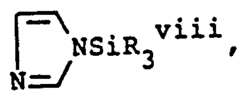, 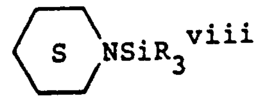,

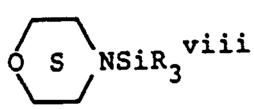 et 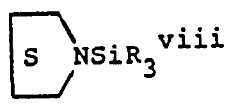

où, dans ces formules, $R^{v}$ et $R^{viii}$ sont choisis dans un groupe formé par l'hydrogène, le groupe allyle, le groupe vinyle et Q', Q' étant choisi dans un groupe formé par

(a) les groupes alkyle comptant moins de vingt atomes de carbone,

(b) les groupes aryle comptant moins de vingt atomes de carbone,

(c) $-(CH_2)_2CF_3$,

(d) $-(CH_2)_3SR^{ix}$,

(e) $-(CH_2)_3NR_2^{ix}$,

(f) $-(CH_2)_3N(R^{ix})(CH_2)_2N(R^{ix})_2$,

(g) 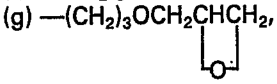,

(h) 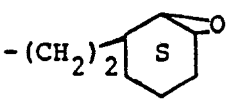

(i) $-(CH_2)_3OC(O)C(CH_3)=CH_2$ et

(j) 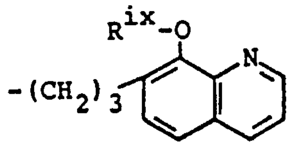 ;

où $R^{vi}$ est indépendamment choisi parmi les groupes méthyle, éthyle et phényle; $R^{vii}$ est indépendamment choisi parmi les groupes méthyle, éthyle et phényle; $R^{ix}$ est indépendamment choisi parmi les groupes alkyle de 1 à 6 atomes de carbone et phényle; la valeur de $c + d$ est 3 et ni $c$, ni $d$ n'a la valeur zéro; et

(iii) des thioéthers choisis dans le groupe formé par

(a) les thioéthers répondant à la formule générale $R^{x}R_2^{xi}SiSR^{xii}$, et

(b) les thioéthers répondant à la formule générale $(R^{x}R_2^{xi}Si)_2S$ ou, dans lesdites formules, $R^{x}$ est choisi dans un groupe formé par l'hydrogène, le groupe allyle, le groupe vinyle et Q'', Q'' étant choisi dans un groupe formé par

(a) les groupes alkyle comptant moins de vingt atomes de carbone,

(b) les groupes aryle comptant moins de vingt atomes de carbone,

(c) $-(CH_2)_2CF_3$,

(d) $-(CH_2)_3SR^{xiii}$,

(e) $-(CH_2)_3NR_2^{xiii}$,

(f) $-(CH_2)_3N(R^{xiii})(CH_2)_2N(R^{xiii})_2$

(g) 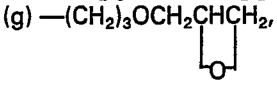,

(h) 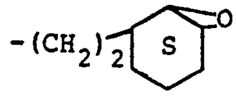 ,

(i) $-(CH_2)_3OC(O)C(CH_3)=CH_2$ et

(j) 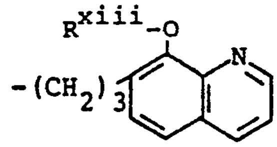 ,

où $R^{xi}$ est indépendamment choisi parmi les groupes méthyle, éthyle et phényle; $R^{xii}$ est indépendamment choisi parmi les groupes méthyle, éthyle et phényle; $R^{xiii}$ est indépendamment choisi parmi les groupes alkyle comptant 1 à 6 atomes de carbone et phényle,
lesdites liaisons covalentes de ladite réaction (II) étant formées par réaction avec les groupes hydroxyle de surface extérieure présents sur la surface extérieure de la matière poreuse.

2. Procédé selon la revendication 1, dans lequel, dans l'étape (I), le silane réagissant rapidement est ajouté peu à peu à une suspension liquide de la matière poreuse.

3. Procédé selon la revendication 1, dans lequel, dans l'étape (I), le silane réagissant rapidement est ajouté peu à peu à un solvant vivement agité qui est en contact direct avec une matière poreuse non particulaire.

4. Procédé selon la revendication 1, dans lequel, dans l'étape (I), le silane réagissant rapidement, sous forme d'une vapeur dans un vide, est mis en contact intime avec la matière poreuse.

5. Procédé selon la revendication 1, dans lequel, dans l'étape (I), un gaz porteur est utilisé pour aminer la vapeur du silane réagissant rapidement en contact avec la matière poreuse.

6. Composition de matière, comprenant une matière poreuse à surface double ayant réagi avec (I) des groupes siliciés non silanoliques et (II) des groupes silicés différents desdits groupes siliciés non silanoliques et qui ont réagi avec la surface poreuse intérieure de la matière poreuse, caractérisée en ce que les groupes siliciés non silanoliques (I) ont réagi avec les groupes hydroxyle de surface extérieure présents à la surface extérieure de la matière poreuse et sont dérivés d'un silane réagissant rapidement choisi parmi

(i) des amides disubstitués, ces amides étant choisis dans un groupe formé par

(a) les amides N,N-disubstitués répondant à la formule générale

$$(R)(R'')_aSi[N(R''')\overset{\displaystyle O}{\overset{\|}{C}}—R']_b$$

et

(b) les amides N,O-disubstitués répondant à la formule générale

$$(R)(R'')_2SiN{=}\underset{\displaystyle OSi(R)(R'')_2}{\underset{|}{C}}—R'$$

où, dans lesdites formules, R est choisi parmi l'hydrogène, le groupe allyle, le groupe vinyle et Q, Q étant choisi dans un groupe formé par

(a) les groupes alkyle comptant moins de vingt atomes de carbone,
(b) les groupes aryle comptant moins de vingt atomes de carbone,
(c) $—(CH_2)_2CF_3$,
(d) $—(CH_2)_3Cl$,
(e) $—(CH_2)_3SR^{iv}$,
(f) $—(CH_2)_3NR_2{}^{iv}$,
(g) $—(CH_2)_3N(R^{iv})(CH_2)_2N(R^{iv})_2$,
(h) $—(CH_2)_3OCH_2CHCH_2$,
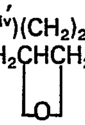

(i) 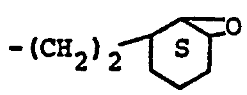 ,

(j) $—(CH_2)_3OC(O)C(CH_3)=CH_2$ et

(k) 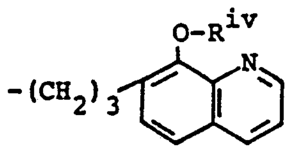

où R'' est indépendamment choisi parmi les groupes méthyle, éthyle et phényle; R''' est indépendamment choisi parmi les groupes méthyle, éthyle et phényle; R' est un groupe alkyle substitué ou non substitué de 1

à 6 atomes de carbone ou l'hydrogène; $R^{iv}$ est choisi parmi les groupes méthyle, éthyle et phényle; la valeur de *a* + *b* est 3 et, ni *a*, ni *b* n'a la valeur zéro;

(ii) des amines substitués, ces amines étant choisies dans un groupe formé par

(a) les amines N,N,N-trisubstitués répondant à la formule générale $(R^{v})(R^{vi})_cSi(NR^{vii}{}_2)_d$ et

(b) des amines hétérocycliques, ces amines hétérocycliques étant choisies dans le groupe formé par

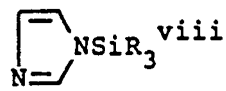, 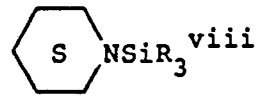,

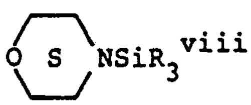 et 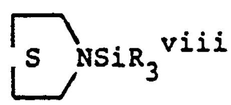

où, dans ces formules, $R^{v}$ et $R^{viii}$ sont choisis dans un groupe formé par l'hydrogène, le groupe allyle, le groupe vinyle et Q', Q' étant choisi dans un groupe formé par

(a) les groupes alkyle comptant moins de vingt atomes de carbone,

(b) les groupes aryle comptant moins de vingt atomes de carbone,

(c) $-(CH_2)_2CF_3$,

(d) $-(CH_2)_3SR^{ix}$,

(e) $-(CH_2)_3NR_2{}^{ix}$,

(f) $-(CH_2)_3N(R^{ix})(CH_2)_2N(R^{ix})_2$,

(g) 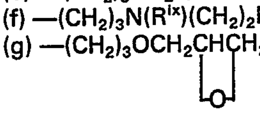

(h) 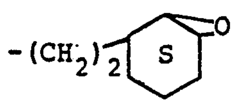 ,

(i) $-(CH_2)_3OC(O)C(CH_3)=CH_2$ et

(j) 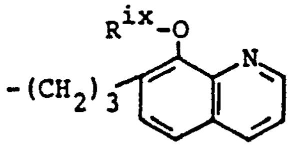 ;

où $R^{vi}$ est indépendamment choisi parmi les groupes méthyle, éthyle et phényle; $R^{vii}$ est indépendamment choisi parmi les groupes méthyle, éthyle et phényle; $R^{ix}$ est indépendamment choisi parmi les groupes alkyle de 1 à 6 atomes de carbone et phényle; la valeur de *c* + *d* est 3 et, ni *c*, ni *d* n'a la valeur zéro; et

(iii) des thioéthers choisis dans le groupe formé par

(a) les thioéthers répondant à la formule générale $R^{x}R_2{}^{xi}SiSR^{xii}$ et

(b) les thioéthers répondant à la formule générale $(R^{x}R_2{}^{xi}Si)_2S$ où, dans lesdites formules, $R^{x}$ est choisi dans un groupe formé par l'hydrogène, le groupe allyle, le groupe vinyle et Q'', Q'' étant choisi dans un groupe formé par

(a) les groupes alkyle comptant moins de vingt atomes de carbone,

(b) les groupes aryle comptant moins de vingt atomes de carbone,

(c) $-(CH_2)_2CF_3$,

(d) $-(CH_2)_3SR^{xiii}$,

(e) $-(CH_2)_3NR_2{}^{xiii}$,

(f) $-(CH_2)_3N(R^{xiii})(CH_2)_2N(R^{xiii})_2$

(g) 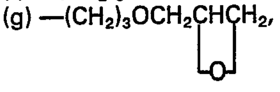

(h) 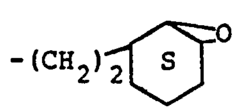 ,

(i) $-(CH_2)_3OC(O)C(CH_3)=CH_2$ et

(j) 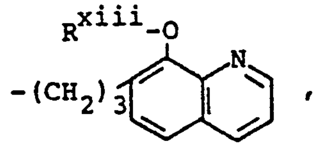 ,

où $R^{xi}$ est indépendamment choisi parmi les groupes méthyle, éthyle et phényle; $R^{xii}$ est indépendamment choisi parmi les groupes méthyle, éthyle et phényle; $R^{xiii}$ est indépendamment choisi parmi les groupes alkyle comptant 1 à 6 atomes de carbone et phényle.

7. Procédé de préparation d'un produit intermédiaire pour une matière poreuse à surface double selon la revendication 6, comprenant les opérations suivantes:

(A) mettre une matière poreuse portant des groupes hydroxyle en contact avec moins qu'un équivalent stoechiométrique, par rapport à la quantité totale de groupes hydroxyle contenue dans la matière poreuse, d'un silane réactif;

(B) laisser le mélange venant de (A) réagir et former des liaisons covalentes par réaction avec les groupes hydroxyle de ladite matière poreuse; et

(C) isoler par la suite ledit produit intermédiaire du mélange de (B),

caractérisé en ce que ledit silane réactif est un silane réagissant rapidement, choisi parmi

(i) des amides disubstitués, ces amides étant choisis dans un groupe formé par

(a) les amides N,N-disubstitués répondant à la formule générale

$$(R)(R'')_aSi[N(R''')\overset{\displaystyle O}{\overset{\|}{C}}—R']_b$$

et

(b) les amides N,O-disubstitués répondant à la formule générale

$$(R)(R'')_2SiN{=}\underset{\displaystyle OSi(R)(R'')_2}{\underset{|}{C}}—R'$$

où, dans lesdites formules, R est choisi parmi l'hydrogène, le groupe allyle, le groupe vinyle et Q, Q étant choisi dans un groupe formé par

(a) les groupes alkyle comptant moins de vingt atomes de carbone,

(b) les groupes aryle comptant moins de vingt atomes de carbone,

(c) $—(CH_2)_2CF_3$,

(d) $—(CH_2)_3Cl$,

(e) $—(CH_2)_3SR^{iv}$,

(f) $—(CH_2)_3NR_2^{iv}$,

(g) $—(CH_2)_3N(R^{iv})(CH_2)_2N(R^{iv})_2$,

(h) $—(CH_2)_3OCH_2CHCH_2$, 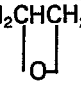

(i) 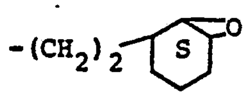 ,

(j) $—(CH_2)_3OC(O)C(CH_3)=CH_2$ et

(k) 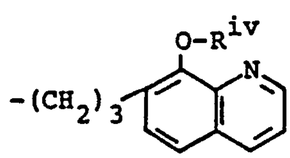 ;

où R'' est indépendamment choisi parmi les groupes méthyle, éthyle et phényle; R''' est choisi parmi les groupes méthyle, éthyle et phényle; R' est un groupe alkyle substitué ou non substitué de 1 à 6 atomes de carbone ou l'hydrogène; $R^{iv}$ est choisi parmi les groupes alkyle et 1 à 6 atomes de carbone et phényle; la valeur de $a + b$ est 3 et, ni $a$, ni $b$ n'a la valeur zéro;

(ii) des amines substitués, ces amines étant choisies dans un groupe formé par

(a) les amines N,N,N-trisubstituées répondant à la formule générale $(R^v)(R^{vi})_cSi(NR^{vii}{}_2)_d$ et

(b) des amines hétérocycliques, ces amines hétérocycliques étant choisies dans le groupe formé par

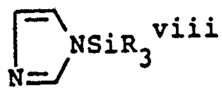, 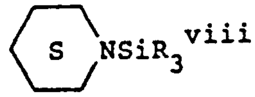,

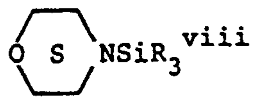 et 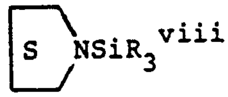

où, dans ces formules, $R^{v}$ et $R^{viii}$ sont choisis dans un groupe formé par l'hydrogène, le groupe allyle, le groupe vinyle et Q', Q' étant choisi dans un groupe formé par

(a) les groupes alkyle comptant moins de vingt atomes de carbone,
(b) les groupes aryle comptant moins de vingt atomes de carbone,
(c) $—(CH_2)_2CF_3$,
(d) $—(CH_2)_3SR^{ix}$,
(e) $—(CH_2)_3NR_2^{ix}$,
(f) $—(CH_2)_3N(R^{ix})(CH_2)_2N(R^{ix})_2$,
(g) $—(CH_2)_3OCH_2CHCH_2$, 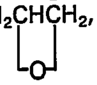

(h) 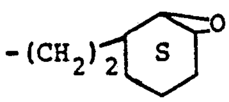 ,

(i) $—(CH_2)_3OC(O)C(CH_3)=CH_2$ et

(j) 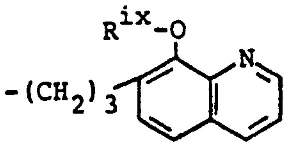 ;

$R^{vi}$ est indépendamment choisi parmi les groupes méthyle, éthyle et phényle; $R^{vii}$ est indépendamment choisi parmi les groupes méthyle, éthyle et phényle; $R^{ix}$ est indépendamment choisi parmi les groupes alkyle de 1 à 6 atomes de carbone et phényle; la valeur de $c + d$ est 3 et, ni $c$, ni $d$ n'a la valeur zéro; et

(iii) des thioéthers choisis dans le groupe formé par
(a) les thioéthers répondant à la formule générale $R^{x}R_2^{xi}SiSR^{xii}$ et
(b) les thioéthers répondant à la formule générale $(R^{x}R_2^{xi}Si)_2S$ où, dans ces formules, $R^{x}$ est choisi dans un groupe formé par l'hydrogène, le groupe allyle, le groupe vinyle et Q'', Q'' étant choisi dans un groupe formé par

(a) les groupes alkyle comptant moins de vingt atomes de carbone,
(b) les groupes aryle comptant moins de vingt atomes de carbone,
(c) $—(CH_2)_2CF_3$,
(d) $—(CH_2)_3SR^{xiii}$,
(e) $—(CH_2)_3NR_2^{xiii}$,
(f) $—(CH_2)_3N(R^{xiii})(CH_2)_2N(R^{xiii})_2$,
(g) $—(CH_2)_3OCH_2CHCH_2$, 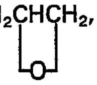

(h) 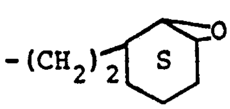 ,

(i) $—(CH_2)_3OC(O)C(CH_3)=CH_2$ et

(j) 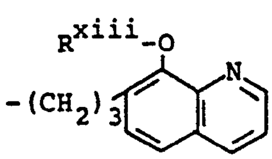 ,

$R^{xi}$ est indépendamment choisi parmi les groupes méthyle, éthyle et phényle; $R^{xii}$ est indépendamment

choisi parmi les groupes méthyle, éthyle et phényle; $R^{xiii}$ est indépendamment choisi parmi les groupes alkyle comptant 1 à 6 atomes de carbone et phényle,
et en ce que ledit silane réagissant rapidement est employé en une quantité qui est au moins stoechiométriquee par rapport à la quantité de groupes hydroxyle de surface extérieures de la matière poreuse, lesdites liaisons covalentes étant formées par réaction dudit silane réagissant rapidement avec les groupes hydroxyle de surface extérieure présents à la surface extérieure de la matière poreuse.

8. Produit intermédiaire pour une matière poreuse à surface double selon la revendication 6, comprenant une matière poreuse portant des groupes hydroxyle dont la surface poreuse intérieure contient des groupes hydroxyle n'ayant pas réagi, caractérisé en ce qu'avec les groupes hydroxyle extérieurs de sa surface extérieure ont réagi des groupes siliciés non silanoliques dérivés d'un silane réagissant rapidement, choisi parmi

(i) des amides disubstitués, ces amides étant choisis dans un groupe formé par

(a) les amides N,N-disubstitués répondant à la formule générale

$$(R)(R'')_aSi[N(R''')\overset{\overset{O}{\|}}{C}—R']_b$$

et

(b) les amides N,O-disubstitués répondant à la formule générale

$$(R)(R'')_2SiN{=}\underset{\underset{OSi(R)(R'')_2}{|}}{C}—R'$$

où, dans lesdites formules, R est choisi parmi l'hydrogène, le groupe allyle, le groupe vinyle et Q, Q étant choisi dans un groupe formé par

(a) les groupes alkyle comptant moins de vingt atomes de carbone,
(b) les groupes aryle comptant moins de vingt atomes de carbone,
(c) $—(CH_2)_2CF_3$,
(d) $—(CH_2)_3Cl$,
(e) $—(CH_2)_3SR^{iv}$,
(f) $—(CH_2)_3NR_2^{iv}$,
(g) $—(CH_2)_3N(R^{iv})(CH_2)_2N(R^{iv})_2$,
(h) $—(CH_2)_3OCH_2CHCH_2$,

(i) 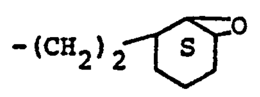 ,

(j) $—(CH_2)_3OC(O)C(CH_3)=CH_2$ et

(k) 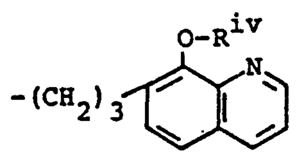 ;

où R'' est indépendamment choisi parmi les groupes méthyle, éthyle et phényle; R''' est choisi parmi les groupes méthyle, éthyle et phényle; R' est un groupe alkyle substitué ou non substitué de 1 à 6 atomes de carbone ou l'hydrogène; $R^{iv}$ est choisi parmi les groupes alkyle de 1 à 6 atomes de carbone et phényle; la valeur de $a + b$ est 3 et, ni *a*, ni *b* n'a la valeur zéro;

(ii) des amines substitués, ces amines étant choisies dans un groupe formé par

(a) les amines N,N,N-trisubstitués répondant à la formule générale $(R^v)(R^{vi})_cSi(NR^{vii}{}_2)_d$ et

(b) des amines hétérocycliques, ces amines hétérocycliques étant choisies dans le groupe formé par

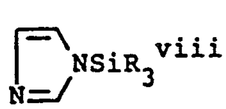 , 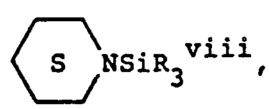 ,

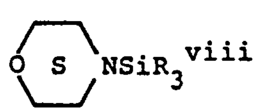 et 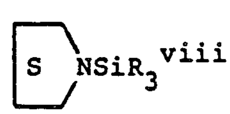

où, dans ces formules, $R^{v}$ et $R^{viii}$ sont choisis dans un groupe formé par l'hydrogène, le groupe allyle, le groupe vinyle et Q', Q' étant choisi dans un groupe formé par

(a) les groupes alkyle comptant moins de vingt atomes de carbone,
(b) les groupes aryle comptant moins de vingt atomes de carbone,
(c) $-(CH_2)_2CF_3$,
(d) $-(CH_2)_3SR^{ix}$,
(e) $-(CH_2)_3NR_2^{ix}$,
(f) $-(CH_2)_3N(R^{ix})(CH_2)_2N(R^{ix})_2$,
(g) $-(CH_2)_3OCH_2CHCH_2$,

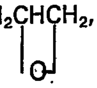

(h) 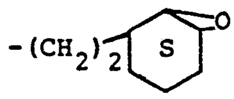 ,

(i) $-(CH_2)_3OC(O)C(CH_3)=CH_2$ et

(j) 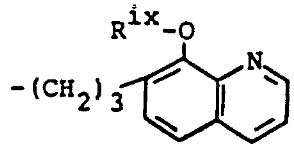 ;

$R^{vi}$ est indépendamment choisi parmi les groupes méthyle, éthyle et phényle; $R^{vii}$ est indépendamment choisi parmi les groupes méthyle, éthyle et phényle; $R^{ix}$ est indépendamment choisi parmi les groupes alkyle de 1 à 6 atomes de carbone et phényle; la valeur de *c* + *d* est 3 et, ni *c*, ni *d* n'a la valeur zéro; et

(iii) des thioéthers choisis dans le groupe formé par
(a) les thioéthers répondant à la formule générale $R^{x}R_2^{xi}SiSR^{xii}$, et
(b) les thioéthers répondant à la formule générale $(R^{x}R_2^{xi}Si)_2S$ où, dans lesdites formules, $R^{x}$ est choisi dans un groupe formé par l'hydrogène, le groupe allyle, le groupe vinyle et Q'', Q'' étant choisi dans un groupe formé par

(a) les groupes alkyle comptant moins de vingt atomes de carbone,
(b) les groupes aryle comptant moins de vingt atomes de carbone,
(c) $-(CH_2)_2CF_3$,
(d) $-(CH_2)_3SR^{xiii}$,
(e) $-(CH_2)_3NR_2^{xiii}$,
(f) $-(CH_2)_3N(R^{xiii})(CH_2)_2N(R^{xiii})_2$,
(g) $-(CH_2)_3OCH_2CHCH_2$,

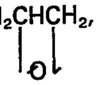

(h) 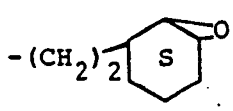 ,

(i) $-(CH_2)_3OC(O)C(CH_3)=CH_2$ et

(j) 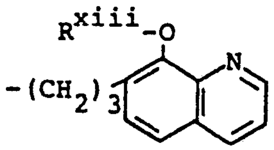 ,

où $R^{xi}$ est indépendamment choisi parmi les groupes méthyle, éthyle et phényle; $R^{xii}$ est indépendamment choisi parmi les groupes méthyle, éthyle et phényle; $R^{xiii}$ est indépendamment choisi parmi les groupes alkyles comptant 1 à 6 atomes de carbone et phényle.